# EUROPEAN PATENT APPLICATION

(11) **EP 4 848 782 A1**
(43) Date of publication of application: **02.12.2026**
(21) Application number: 25751045.3
(22) Date of filing: 08.01.2025
(51) Int. Cl.: H04W 24/02

(54) **COMMUNICATION METHOD AND RELATED DEVICE**

(30) Priority: 07.02.2024 CN 202410175499
(71) Applicant: Huawei Technologies Co., Ltd., Shenzhen, Guangdong 518129 (CN)
(72) Inventor: ZHANG, Gongzheng, Shenzhen, Guangdong 518129 (CN); LI, Rong, Shenzhen, Guangdong 518129 (CN); HUANGFU, Yourui, Shenzhen, Guangdong 518129 (CN); XU, Chen, Shenzhen, Guangdong 518129 (CN)
(74) Representative: Huawei European IPR
(86) International application number: PCT/CN2025/071211
(87) International publication number: WO 2025/167443

(57) **Abstract**

A communication method and a related device are provided. In the method, a first model may be deployed on a first communication apparatus, and the first communication apparatus may measure and/or feed back, based on an indication of first information, task performance implemented based on an output of the first model. In this way, the computational power of a communication node is enabled to process a model and a downstream task (and/or a downstream model) of the model, while implementing performance measurement and/or performance feedback. In some embodiments, the first communication apparatus may feed back, based on the indication of the first information, performance of M tasks associated with the first model. This can improve flexibility of solution implementation, and can also achieve indication of performance measurement and/or feedback of a downstream task (and/or a downstream model) in a scenario in which the first model has the downstream task (and/or the downstream model).

## Description

This application claims priority to Chinese Patent Application No. 202410175499.3, filed with the China National Intellectual Property Administration on February 7, 2024 and entitled "COMMUNICATION METHOD AND RELATED DEVICE", which is incorporated herein by reference in its entirety.

### TECHNICAL FIELD

This application relates to the communication field, and in particular, to a communication method and a related device.

### BACKGROUND

Wireless communication may be transmission communication performed between two or more communication nodes without relying on conductors or cables. The communication nodes usually include a network device and a terminal device.

Currently, in a wireless communication system, a communication node usually has signal receiving and sending capabilities and a computing capability. A network device having a computing capability is used as an example. The computing capability of the network device mainly provides computational power support for signal receiving and sending capabilities (for example, performing sending processing and receiving processing on a signal), to implement communication between the network device and another communication node.

However, in a communication network, in addition to providing computational power support for the foregoing communication task based on the computing capability of the communication node, the communication node may further have spare computing capabilities. Therefore, how to use these computing capabilities is an urgent technical problem.

### SUMMARY

This application provides a communication method and a related device, so that a communication node can process a model and a downstream task (and/or a downstream model) of the model, while implementing performance measurement and/or performance feedback of the downstream task (and/or the downstream model) of the model.

A first aspect of this application provides a communication method. The method is performed by a first communication apparatus. The first communication apparatus may be a communication device (for example, a terminal device or a network device), or the first communication apparatus may be a part of components (for example, a processor, a chip, a baseband (baseband) chip, a modem (modem) chip, a system on chip (system on chip, SoC) chip including a modem core, a system in package (system in package, SIP) chip, a communication module, or a chip system) in a communication device. Alternatively, the first communication apparatus may be a logical module or software that can implement all or a part of functions of a communication device. In the method, the first communication apparatus receives first information. The first information indicates M tasks. Herein, M is a positive integer. An input of any task in the M tasks is determined based on an output of a first model. The first communication apparatus sends second information. The second information indicates performance of one or more tasks in the M tasks.

Based on the foregoing technical solution, after the first communication apparatus receives the first information indicating the M tasks, the first communication apparatus may send the second information, and indicate the performance of the one or more tasks in the M tasks by using the second information. In other words, a first model may be deployed on the first communication apparatus, and the first communication apparatus may measure and/or feed back, based on an indication of the first information, task performance implemented based on an output of the first model. In this way, the computational power of a communication node is enabled to process a model and a downstream task (and/or a downstream model) of the model, while implementing and performance measurement and/or performance feedback.

In addition, in the M tasks indicated by the first information, the input of the any task is determined based on the output of the first model, that is, the output of the first model may be used to execute the one or more tasks. In the foregoing technical solution, the first communication apparatus may measure and/or feed back, based on the indication of the first information, performance of the M tasks associated with the first model. This can improve flexibility of solution implementation, and can also achieve indication of performance measurement and/or feedback of a downstream task in a scenario in which the first model has the downstream task.

In this application, the model and another term may be replaced with each other, for example, a neural network model, a neural network, an artificial intelligence (artificial intelligence, AI) model, or a machine learning model.

Optionally, the first information may indicate to perform one or more of the following operations on the performance of the M tasks: measuring, testing, monitoring, evaluating, gauging, feeding back, or reporting.

It should be understood that the input of the any task in the M tasks is determined based on the output of the first model. It may be understood that the input of the any task includes at least a result obtained by executing no task, one task, or a plurality of tasks on the output of the first model.

Optionally, the any task in the M tasks may be implemented in a plurality of manners, including signal processing, model processing, processing in another application (application, APP), or another manner.

For example, the output of the first model may be multiple path component (multiple path component, MPC) information, and the any task in the M tasks may be model processing for obtaining channel-state information (channel-state information, CSI), resource management or user scheduling application, model processing for path loss prediction, network optimization application, model processing for beam prediction, or beam management application.

For another example, the output of the first model may be a channel frequency response (channel frequency response, CFR), and the any task in the M tasks may be model processing for obtaining CSI, resource management or user scheduling application, model processing for interference prediction, interference management application, model processing for modulation and coding scheme (modulation and coding scheme, MCS) prediction, or adaptive modulation and coding application.

Optionally, performance of a task may include one or more of accuracy, precision, and a processing speed of the task (or an output of the task).

It should be noted that the second information may indicate the performance of the one or more tasks in a plurality of manners.

For example, after locally executing the one or more tasks and obtaining outputs of the one or more tasks, the first communication apparatus may determine the performance of the one or more tasks based on the outputs of the one or more tasks. In addition, the second information sent by the first communication apparatus may include information indicating or representing the performance of the one or more tasks.

For another example, after the first communication apparatus may locally execute the one or more tasks and obtain outputs of the one or more tasks, the second information sent by the first communication apparatus may include the outputs of the one or more tasks. Subsequently, a receiving party of the second information can determine the performance of the one or more tasks based on the outputs of the one or more tasks.

In a possible implementation of the first aspect, that the first communication apparatus sends the second information includes: the first communication apparatus sends the second information when the performance of the one or more tasks in the M tasks is less than or equal to a threshold.

Based on the foregoing technical solution, after the first communication apparatus receives the first information indicating the M tasks, the first communication apparatus may obtain performance corresponding to the M tasks, and when the performance of the one or more tasks in the M tasks is less than or equal to the threshold, send the second information indicating the performance of the one or more tasks, so that the receiving party of the second information can determine, based on the second information, a task whose performance deteriorates.

A second aspect of this application provides a communication method. The method is performed by a second communication apparatus. The second communication apparatus may be a communication device (for example, a terminal device or a network device), or the second communication apparatus may be a part of components (for example, a processor, a chip, a baseband (baseband) chip, a modem (modem) chip, a system on chip (system on chip, SoC) chip including a modem core, a system in package (system in package, SIP) chip, a communication module, or a chip system) in a communication device. Alternatively, the second communication apparatus may be a logical module or software that can implement all or a part of functions of a communication device. In the method, the second communication apparatus sends first information. The first information indicates M tasks. Herein, M is a positive integer. An input of any task in the M tasks is determined based on an output of a first model. The second communication apparatus receives second information. The second information indicates performance of one or more tasks in the M tasks.

Based on the foregoing technical solution, after the second communication apparatus sends the first information indicating the M tasks, the second communication apparatus may receive the second information, and determine the performance of the one or more tasks in the M tasks based on the second information. In other words, a first model may be deployed on a first communication apparatus, and the first communication apparatus may measure and/or feed back, based on an indication of the first information, task performance implemented based on an output of the first model. In this way, the computational power of a communication node is enabled to process a model and a downstream task (and/or a downstream model) of the model, while implementing performance measurement and/or performance feedback.

In addition, in the M tasks indicated by the first information, the input of the any task is determined based on the output of the first model, that is, the output of the first model may be used to execute the one or more tasks. In the foregoing technical solution, the first communication apparatus may measure and/or feed back, based on the indication of the first information, performance of the M tasks associated with the first model. This can improve flexibility of solution implementation, and can also achieve indication of performance measurement and/or feedback of a downstream task in a scenario in which the first model has the downstream task.

It should be understood that the input of the any task in the M tasks is determined based on the output of the first model. It may be understood that the input of the any task includes at least a result obtained by executing no task, one task, or a plurality of tasks on the output of the first model.

In a possible implementation of the first aspect or the second aspect, the M tasks are included in N tasks. Herein, N is an integer greater than or equal to M. The N tasks correspond to P task sets, each of the P task sets includes one or more tasks in the N tasks, and different task sets in the P task sets include different tasks. An input of any task in an (i+1)^{th} task set in the P task sets includes outputs of one or more tasks in an i^{th} task set in the P task sets. Herein, P is a positive integer, and i ranges from 1 to P-1.

For example, P is greater than 2. In the P task sets, inputs of one or more tasks included in a 1^{st} task set include at least the output of the first model, and inputs of one or more tasks included in a 2^{nd} task set include at least a result obtained by executing the one or more tasks in the 1^{st} task set on the output of the first model. By analogy, inputs of one or more tasks included in a P^{th} task set include at least a result obtained by performing processing of one or more tasks in a (P-1)^{th} task set on the output of the first model. In other words, the P task sets may also be expressed as P levels of task sets. For example, in the P levels of task sets, inputs of one or more tasks included in a 1^{st} level of task set include at least the output of the first model, and inputs of one or more tasks included in a 2^{nd} level of task set include at least a result obtained by executing the one or more tasks in the 1^{st} level of task set on the output of the first model. By analogy, inputs of one or more tasks included in a P^{th} level of task set include at least a result obtained by performing processing of one or more tasks in a (P-1)^{th} level of task set on the output of the first model.

Optionally, different task sets may be understood as different levels of task sets. For example, the P task sets may be expressed as the P levels of task sets, an i^{th} task set may be expressed as an i^{th} level of task set, and an (i+1)^{th} task set may be expressed as an (i+1)^{th} level of task set.

Based on the foregoing technical solution, in the N tasks including the M tasks, an input of any task is determined based on the output of the first model. The input of the any task includes at least a result obtained by executing no task, one task, or a plurality of tasks on the output of the first model. In other words, the N tasks may include a set of one or more levels of downstream tasks of the first model. In this way, the first information can indicate performance measurement and/or feedback of a downstream task of the first model in a scenario in which the first model has one or more levels of downstream task sets.

Optionally, an input of any task in the (i+1)^{th} task set in the P task sets includes the outputs of the one or more tasks in the i^{th} task set in the P task sets. It may be understood that an input of any task in a j^{th} task set in the P task sets includes a result obtained by performing j-1 processing processes on the output of the first model. The j-1 processing processes separately include processing of one or more tasks in each of j-1 task sets before the j^{th} task set. Herein, a value of j ranges from 1 to P.

In a possible implementation of the first aspect or the second aspect, the first information includes M identifiers, and the M identifiers respectively indicate the M tasks. Any identifier in the M identifiers includes K indexes. A k^{th} index in the K indexes indicates one or more tasks in a k^{th} task set in first K task sets of the P task sets. A value of k ranges from 1 to K, and K is a positive integer less than or equal to P.

It should be understood that the M identifiers respectively indicate the M tasks. It may be understood that the M identifiers are in a one-to-one correspondence with the M tasks, and/or an m^{th} identifier in the M identifiers indicates an m^{th} task in the M tasks. Herein, a value of m ranges from 1 to M.

Based on the foregoing technical solution, the first information received by the first communication apparatus may include the M identifiers respectively indicating the M tasks. In the P task sets, a task indicated by any identifier may be expressed as a task in a K^{th} (K is an integer less than or equal to P) task set in the P task sets. In addition, the any identifier in the M identifiers may include the K indexes, to separately indicate one or more tasks included in each of the K task sets by using the K indexes.

Optionally, different task sets may be understood as different levels of task sets. For example, K task sets may be expressed as K levels of task sets, and a k^{th} task set may be expressed as a k^{th} level of task set.

Optionally, in the K task sets, indexes (that is, K indexes) of different task sets may be consecutive (for example, continuously increasing or continuously decreasing).

In a possible implementation of the first aspect or the second aspect, the any identifier further includes an identifier of the first model.

Based on the foregoing technical solution, one or more first models may be deployed on the first communication apparatus, and correspondingly, each first model may have a downstream task. Therefore, the any identifier in the M identifiers indicating the M tasks may further include the identifier of the first model. In this manner, the first information can indicate the downstream tasks corresponding to the one or more first models.

In a possible implementation of the first aspect or the second aspect, the first information includes T indexes, tasks indicated by the T indexes are the M tasks, the T indexes respectively indicate T task sets in the P task sets, T is a positive integer less than or equal to P, a t^{th} index in the T indexes indicates no task, one task, or a plurality of tasks included in a t^{th} task set in the T task sets, and t is a positive integer less than T.

Based on the foregoing technical solution, the N downstream tasks of the first model may be included in the P task sets, and correspondingly, the M tasks in the N tasks may be included in the T task sets in the P task sets. The first information indicating the M tasks may include the T indexes, and the T indexes separately indicate no task, one task, or a plurality of tasks in each of the T task sets. In this manner, the first information can indicate the M tasks by using a task included in each of the T task sets.

Optionally, different task sets may be understood as different levels of task sets. For example, T task sets may be expressed as T levels of task sets, and a t^{th} task set may be expressed as a t^{th} level of task set.

Optionally, T is less than or equal to P, that is, the T task sets are all or part of the P task sets. Correspondingly, in the T task sets, indexes (that is, T indexes) of different task sets may be consecutive (for example, continuously increasing or continuously decreasing), or may be inconsecutive. This is not limited herein.

In a possible implementation of the first aspect or the second aspect, the first information further includes an identifier of the first model.

Based on the foregoing technical solution, in addition to the T indexes, the first information may further include the identifier of the first model. One or more first models may be deployed on the first communication apparatus, and correspondingly, each first model may have a downstream task. Therefore, in the first information indicating the M tasks, the first information may further include the identifier of the first model. In this manner, the first information can indicate the downstream tasks corresponding to the one or more first models.

In a possible implementation of the first aspect or the second aspect, the T indexes satisfy at least one of the following: in the t^{th} index in the T indexes, a value of a 1^{st} bit indicates whether the first information includes a (t+x)^{th} index, and a value of x ranges from 1 to T-t; or in the t^{th} index in the T indexes, when a value of the t^{th} index is a preset value, the t^{th} index indicates a task (or all tasks) included in the t^{th} task set.

For example, that the value of the t^{th} index is the preset value may be understood as that, in a plurality of bits included in the t^{th} index, values of bits other than the 1^{st} bit are the preset value (for example, all 0s or all 1s); or in a plurality of bits included in the t^{th} index, values of the plurality of bits are the preset value.

Based on the foregoing technical solution, when the value of the 1^{st} bit in the t^{th} index in the T indexes indicates whether the first information includes the (t+x)^{th} index, the first communication apparatus can determine, based on the value of the 1^{st} bit in the t^{th} index, whether the (t+x)^{th} index needs to be parsed, to reduce implementation complexity and avoid unnecessary overheads.

In addition, in the t^{th} index in the T indexes, when the value of the t^{th} index is the preset value, the t^{th} index indicates a task included in the t^{th} task set. In this manner, one or more tasks corresponding to an identifier can be indicated by using a special value of the identifier, to reduce overheads.

In a possible implementation of the first aspect or the second aspect, the first information includes M identifiers, and the M identifiers respectively indicate the M tasks. In the M identifiers, different identifiers have a same length.

Based on the foregoing technical solution, the first information may indicate the M tasks respectively by using the M equal-length identifiers. In other words, different tasks may be indicated by using equal-length sequences. In this manner, implementation complexity can be reduced.

In a possible implementation of the first aspect or the second aspect, the second information further indicates the one or more tasks in the M tasks.

It should be understood that, for a manner in which the second information indicates the one or more tasks in the M tasks, reference may be made to the manner in which the first information indicates the one or more tasks in the M tasks. For example, the second information may include the M identifiers and the T indexes.

Based on the foregoing technical solution, the second information may indicate the performance of the one or more tasks in the M tasks, and correspondingly, the second information may further indicate the one or more tasks. In this manner, a receiving party of the second information can determine the one or more tasks in the M tasks based on the second information, and determine that the performance indicated by the second information is the performance of the one or more tasks in the M tasks.

A third aspect of this application provides a communication method. The method is performed by a first communication apparatus. The first communication apparatus may be a communication device (for example, a terminal device or a network device), or the first communication apparatus may be a part of components (for example, a processor, a chip, a baseband (baseband) chip, a modem (modem) chip, a system on chip (system on chip, SoC) chip including a modem core, a system in package (system in package, SIP) chip, a communication module, or a chip system) in a communication device. Alternatively, the first communication apparatus may be a logical module or software that can implement all or a part of functions of a communication device. In the method, the first communication apparatus receives third information. The third information indicates M models. Herein, M is a positive integer. Any model in the M models is determined based on a second model. The first communication apparatus sends fourth information. The fourth information indicates performance of one or more models in the M models.

Based on the foregoing technical solution, after the first communication apparatus receives first information indicating the M models, the first communication apparatus may send the fourth information, and indicate the performance of the one or more models in the M models by using the fourth information. In other words, a second model and the M models obtained based on the second model may be deployed on the first communication apparatus, and the first communication apparatus may measure and/or feed back performance of the M models based on an indication of the first information. In this way, the computational power of a communication node is enabled to process a model and a downstream task (and/or a downstream model) of the model, while implementing performance measurement and/or performance feedback.

In addition, any model in the M models indicated by the first information is determined based on the second model. In other words, the second model may be processed one or more times to generate any model in the M models. In the foregoing technical solution, the first communication apparatus may measure and/or feed back, based on the indication of the first information, the performance of the M models corresponding to the second model. This can improve flexibility of solution implementation, and can also achieve indication of performance measurement and/or feedback of a downstream model in a scenario in which the second model has the downstream model.

It should be understood that any model in the M models is determined based on the second model. It may be understood that any model in the M models is obtained by performing one or more times of model processing based on the second model. Any processing in the one or more times of model processing may be model fine tuning, model distillation, model pruning, model compression, model fusion, or other model processing.

Optionally, performance of a model may include one or more of accuracy, precision, and a processing speed of the model (or an output of the model).

It should be noted that the fourth information may indicate the performance of the one or more models in a plurality of manners.

For example, after locally executing the one or more models and obtaining outputs of the one or more models, the first communication apparatus may determine the performance of the one or more models based on the outputs of the one or more models. In addition, the fourth information sent by the first communication apparatus may include information indicating or representing the performance of the one or more models.

For another example, after the first communication apparatus may locally execute the one or more models and obtain outputs of the one or more models, the fourth information sent by the first communication apparatus may include the outputs of the one or more models. Subsequently, a receiving party of the second information can determine the performance of the one or more models based on the outputs of the one or more models.

In a possible implementation of the third aspect, that the first communication apparatus sends the fourth information includes: the first communication apparatus sends the fourth information when the performance of the one or more models in the M models is less than or equal to a threshold.

Based on the foregoing technical solution, after the first communication apparatus receives the third information indicating the M models, the first communication apparatus may obtain performance corresponding to the M models, and when the performance of the one or more models in the M models is less than or equal to the threshold, send the fourth information indicating the performance of the one or more models, so that the receiving party of the fourth information can determine, based on the fourth information, a model whose performance deteriorates.

A fourth aspect of this application provides a communication method. The method is performed by a second communication apparatus. The second communication apparatus may be a communication device (for example, a terminal device or a network device), or the second communication apparatus may be a part of components (for example, a processor, a chip, a baseband (baseband) chip, a modem (modem) chip, a system on chip (system on chip, SoC) chip including a modem core, a system in package (system in package, SIP) chip, a communication module, or a chip system) in a communication device. Alternatively, the second communication apparatus may be a logical module or software that can implement all or a part of functions of a communication device. In the method, the second communication apparatus sends third information. The third information indicates M models. Herein, M is a positive integer. Any model in the M models is determined based on a second model. The second communication apparatus receives fourth information. The fourth information indicates performance of one or more models in the M models.

Based on the foregoing technical solution, after the second communication apparatus sends first information indicating the M models, the second communication apparatus may receive the fourth information, and determine the performance of the one or more models in the M models based on the fourth information. In other words, a second model and the M models obtained based on the second model may be deployed on the first communication apparatus, and the first communication apparatus may measure and/or feed back performance of the M models based on an indication of the first information. In this way, the computational power of a communication node is enabled to process a model and a downstream task (and/or a downstream model) of the model, while implementing performance measurement and/or performance feedback and performance feedback.

In addition, any model in the M models indicated by the first information is determined based on the second model. In other words, the second model may be processed one or more times to generate any model in the M models. In the foregoing technical solution, the first communication apparatus may measure and/or feed back, based on the indication of the first information, the performance of the M models corresponding to the second model. This can improve flexibility of solution implementation, and can also achieve indication of performance measurement and/or feedback of a downstream model in a scenario in which the second model has the downstream model.

In a possible implementation of the third aspect or the fourth aspect, the M models are included in N models. Herein, N is an integer greater than or equal to M. The N models correspond to P model sets, each model set in the P model sets includes one or more models in the N models, and different model sets in the P model sets include different models. Any model in an (i+1)^{th} model set in the P model sets is determined based on one or more models in an i^{th} model set in the P model sets. Herein, P is a positive integer, and i ranges from 1 to P-1.

For example, P is greater than 2. In the P model sets, any model in one or more models included in a 1^{st} model set is obtained by performing model processing based on the second model, and any model in one or more models included in a 2^{nd} model set is obtained by performing model processing based on the one or more models in the 1^{st} model set. By analogy, any model in one or more models included in a P^{th} model set is obtained by performing model processing based on one or more models in a (P-1)^{th} model set. In other words, the P model sets may also be expressed as P levels of model sets. In the P levels of model sets, any model in one or more models included in a 1^{st} level of model set is obtained by performing model processing based on the second model, and any model in one or more models included in a 2^{nd} level of model set is obtained by performing model processing based on the one or more models in the 1^{st} level of model set. By analogy, any model in one or more models included in a P^{th} level of model set is obtained by performing model processing based on one or more models in a (P-1)^{th} level of model set.

Optionally, different model sets may be understood as different levels of model sets. For example, the P model sets may be expressed as P levels of model sets, an i^{th} model set may be expressed as an i^{th} level of model set, and an (i+1)^{th} model set may be expressed as an (i+1)^{th} level of model set.

Based on the foregoing technical solution, any model in the N models including the M models is determined based on the second model. The any model may be obtained by performing no model processing or one or more times of model processing on the second model. In other words, the N models may include one or more levels of downstream model sets of the second model. In this way, the first information can indicate performance measurement and/or feedback of a downstream model of the second model in a scenario in which the second model has one or more levels of downstream model sets.

Optionally, any model in the (i+1)^{th} model set in the P model sets is determined based on the one or more models in the i^{th} model set in the P model sets. It may be understood that any model in a p^{th} model set in the P model sets is obtained by performing p-1 processing processes on the second model. The p-1 processing processes include model processing corresponding to one or more models in each model set in p-1 model sets before the p^{th} model set. Herein, a value of p ranges from 1 to P.

In a possible implementation of the third aspect or the fourth aspect, the third information includes M identifiers, and the M identifiers respectively indicate the M models. Any identifier in the M identifiers includes K indexes. A k^{th} index in the K indexes indicates model processing corresponding to one or more models in a k^{th} model set in first K model sets of the P model sets. A value of k ranges from 1 to K, and K is a positive integer less than or equal to P.

It should be understood that the M identifiers respectively indicate the M models. It may be understood that the M identifiers are in a one-to-one correspondence with the M models, and/or an m^{th} identifier in the M identifiers indicates an m^{th} model in the M models. Herein, a value of m ranges from 1 to M.

Based on the foregoing technical solution, the first information received by the first communication apparatus may include the M identifiers respectively indicating the M models. In the P model sets, a model indicated by any identifier may be expressed as a model in a K^{th} (K is an integer less than or equal to P) model set in the P model sets. In addition, any identifier in the M identifiers may include K indexes, to separately indicate, by using the K indexes, model processing corresponding to the model.

Optionally, different model sets may be understood as different levels of model sets. For example, the K model sets may be expressed as K levels of model sets, and the k^{th} model set may be expressed as a k^{th} level of model set.

Optionally, in the K model sets, indexes (that is, K indexes) of different model sets may be consecutive (for example, continuously increasing or continuously decreasing).

In a possible implementation of the third aspect or the fourth aspect, the any identifier further includes an identifier of processing of the second model.

Based on the foregoing technical solution, one or more second models may be deployed on the first communication apparatus, and correspondingly, each second model may have a downstream model. Therefore, the any identifier in the M identifiers indicating the M models may further include the identifier of the second model. In this manner, the first information can indicate the downstream models corresponding to the one or more second models.

In a possible implementation of the third aspect or the fourth aspect, the third information includes T indexes, models indicated by the T indexes are the M models, the T indexes respectively indicate T model sets in the P model sets, T is a positive integer less than or equal to P, a t^{th} index in the T indexes indicates no model, one model, or a plurality of models included in a t^{th} model set in the T model sets, and t is a positive integer less than T.

Based on the foregoing technical solution, the N downstream models of the second model may be included in the P model sets, and correspondingly, the M models in the N models may be included in the T model sets in the P model sets. The first information indicating the M models may include the T indexes. The T indexes separately indicate no model, one model, or a plurality of models in each model set in the T model sets. In this manner, the first information can indicate the M models by using a model included in each model set in the T model sets.

Optionally, different model sets may be understood as different levels of model sets. For example, the T model sets may be expressed as T levels of model sets, and the t^{th} model set may be expressed as a t^{th} level of model set.

Optionally, T is less than or equal to P, that is, the T model sets are all or part of the P model sets. Correspondingly, in the T model sets, indexes (that is, T indexes) of different model sets may be consecutive (for example, continuously increasing or continuously decreasing), or may be inconsecutive. This is not limited herein.

In a possible implementation of the third aspect or the fourth aspect, the third information further includes an identifier of processing of the second model.

Based on the foregoing technical solution, in addition to the T indexes, the third information may further include the identifier of the second model. One or more second models may be deployed on the first communication apparatus, and correspondingly, each second model may have a downstream model. Therefore, in the third information indicating the M models, the third information may further include the identifier of the second model. In this manner, the first information can indicate the downstream models corresponding to the one or more second models.

In a possible implementation of the third aspect or the fourth aspect, the T indexes satisfy at least one of the following: in the t^{th} index in the T indexes, a value of a 1^{st} bit indicates whether the third information includes a (t+x)^{th} index, and a value of x ranges from 1 to T-t; or in the t^{th} index in the T indexes, when a value of the t^{th} index is a preset value, the t^{th} index indicates a model (or all models) included in the t^{th} model set.

For example, that the value of the t^{th} index is the preset value may be understood as that, in a plurality of bits included in the t^{th} index, values of bits other than the 1^{st} bit are the preset value (for example, all 0s or all 1s); or in a plurality of bits included in the t^{th} index, values of the plurality of bits are the preset value.

Based on the foregoing technical solution, when the value of the 1^{st} bit in the t^{th} index in the T indexes indicates whether the first information includes the (t+x)^{th} index, the first communication apparatus can determine, based on the value of the 1^{st} bit in the t^{th} index, whether the (t+x)^{th} index needs to be parsed, to reduce implementation complexity and avoid unnecessary overheads.

In addition, in the t^{th} index in the T indexes, when the value of the t^{th} index is the preset value, the t^{th} index indicates a model included in the t^{th} model set. In this manner, one or more models corresponding to an identifier can be indicated by using a special value of the identifier, to reduce overheads.

In a possible implementation of the third aspect or the fourth aspect, the third information includes M identifiers, and the M identifiers respectively indicate the M models. In the M identifiers, different identifiers have a same length.

Based on the foregoing technical solution, the third information may indicate the M models respectively by using the M equal-length identifiers. In other words, different models may be indicated by using equal-length sequences. In this manner, implementation complexity can be reduced.

In a possible implementation of the third aspect or the fourth aspect, the fourth information further indicates identifiers of one or more models in the M models.

Based on the foregoing technical solution, the fourth information may indicate the performance of the one or more models in the M models, and correspondingly, the fourth information may further indicate the one or more models. In this manner, the receiving party of the fourth information can determine the one or more models in the M models based on the fourth information, and determine that the performance indicated by the fourth information is the performance of the one or more models in the M models.

It should be understood that, for a manner in which the fourth information indicates the one or more models in the M models, reference may be made to the manner in which the third information indicates the one or more models in the M models. For example, the fourth information may include the M identifiers and the T indexes.

A fifth aspect of this application provides a communication apparatus. The apparatus is a first communication apparatus. The apparatus includes a transceiver unit and a processing unit. The transceiver unit is configured to receive first information. The first information indicates M tasks. Herein, M is a positive integer. An input of any task in the M tasks is determined based on an output of a first model. The processing unit is configured to determine second information. The transceiver unit is further configured to send the second information. The second information indicates performance of one or more tasks in the M tasks.

In the fifth aspect of this application, a component module of the communication apparatus may be further configured to: perform the steps performed in the possible implementations of the first aspect, and achieve corresponding technical effects. For details, refer to the first aspect. Details are not described herein again.

A sixth aspect of this application provides a communication apparatus. The apparatus is a second communication apparatus. The apparatus includes a transceiver unit and a processing unit. The processing unit is configured to determine first information. The transceiver unit is configured to send the first information. The first information indicates M tasks. Herein, M is a positive integer. An input of any task in the M tasks is determined based on an output of a first model. The transceiver unit is further configured to receive the second information. The second information indicates performance of one or more tasks in the M tasks.

In the sixth aspect of this application, a component module of the communication apparatus may be further configured to: perform the steps performed in the possible implementations of the second aspect, and achieve corresponding technical effects. For details, refer to the second aspect. Details are not described herein again.

A seventh aspect of this application provides a communication apparatus. The apparatus is a first communication apparatus. The apparatus includes a transceiver unit and a processing unit. The transceiver unit is configured to receive third information. The third information indicates M models. Herein, M is a positive integer. Any model in the M models is determined based on a second model. The processing unit is configured to determine fourth information. The transceiver unit is further configured to send the fourth information. The fourth information indicates performance of one or more models in the M models.

In the seventh aspect of this application, a component module of the communication apparatus may be further configured to: perform the steps performed in the possible implementations of the third aspect, and achieve corresponding technical effects. For details, refer to the third aspect. Details are not described herein again.

An eighth aspect of this application provides a communication apparatus. The apparatus is a second communication apparatus. The apparatus includes a transceiver unit and a processing unit. The processing unit is configured to determine third information. The transceiver unit is configured to send the third information. The third information indicates M models. Herein, M is a positive integer. Any model in the M models is determined based on a second model. The transceiver unit is further configured to receive fourth information. The fourth information indicates performance of one or more models in the M models.

In the eighth aspect of this application, a component module of the communication apparatus may be further configured to perform the steps performed in the possible implementations of the fourth aspect, and achieve corresponding technical effects. For details, refer to the fourth aspect. Details are not described herein again.

A ninth aspect of this application provides a communication apparatus, including at least one processor. The at least one processor is coupled to a memory. The memory is configured to store a program or instructions. The at least one processor is configured to execute the program or the instructions, so that the apparatus implements the method according to any possible implementation of any one of the first aspect to the fourth aspect.

A tenth aspect of this application provides a communication apparatus, including at least one logic circuit and an input/output interface. The logic circuit is configured to perform the method according to any possible implementation of any one of the first aspect and the fourth aspect.

An eleventh aspect of this application provides a communication system. The communication system includes the first communication apparatus and the second communication apparatus.

A twelfth aspect of this application provides a computer-readable storage medium. The storage medium is configured to store one or more computer-executable instructions. When the computer-executable instructions are executed by a processor, the processor performs the method according to any possible implementation of any one of the first aspect to the fourth aspect.

A thirteenth aspect of this application provides a computer program product (or referred to as a computer program). When the computer program in the computer program product is executed by a processor, the processor performs the method according to any possible implementation of any one of the first aspect to the fourth aspect.

A fourteenth aspect of this application provides a chip or a chip system. The chip or the chip system includes at least one processor, configured to support a communication apparatus in implementing the method according to any possible implementation of any one of the first aspect to the fourth aspect.

In a possible design, the chip or the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

For technical effects brought by any design in the fifth aspect to the fourteenth aspect, refer to the technical effects brought by different designs in the first aspect to the fourth aspect. Details are not described herein again.

### BRIEF DESCRIPTION OF DRAWINGS

FIG. 1a to FIG. 1c are diagrams of communication systems according to this application;
FIG. 2a to FIG. 2e are diagrams of an AI processing process according to this application;
FIG. 3 is a diagram of interaction of a communication method according to this application;
FIG. 4a and FIG. 4b are diagrams of relationships between a model and tasks according to this application;
FIG. 5 is a diagram of interaction of a communication method according to this application;
FIG. 6a and FIG. 6b are diagrams of relationships between different models according to this application; and
FIG. 7 to FIG. 11 are diagrams of communication apparatuses according to this application.

### DESCRIPTION OF EMBODIMENTS

First, some terms in embodiments of this application are described for ease of understanding by a person skilled in the art.
(1) A terminal device may be a wireless terminal device that can receive scheduling and indication information of a network device. The wireless terminal device may be a device providing voice and/or data connectivity for a user, a handheld device having a wireless connection function, or another processing device connected to a wireless modem.

The terminal device may communicate with one or more core networks or the internet through a radio access network (radio access network, RAN). The terminal device may be a mobile terminal device such as a mobile telephone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges voice and/or data with the radio access network. For example, the terminal device may be a device such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having wireless transmission and reception functions. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and need to collaboratively work with other devices such as smartphones, for example, various smart bands, smart helmets, or smart jewelry for monitoring physical signs.

The terminal may alternatively be an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), or the like.

In addition, the terminal device may alternatively be a terminal device in a future communication system (for example, a 6th generation (6th generation, 6G) communication system) evolved after a 5th generation (5th generation, 5G) communication system, a terminal device in a future public land mobile network (public land mobile network, PLMN), or the like. For example, a 6G network may further extend a form and a function of a 5G communication terminal, and a 6G terminal includes but is not limited to a vehicle, a cellular network terminal (integrating a function of a satellite terminal), an uncrewed aerial vehicle, and an internet of things (internet of things, IoT) device.

In embodiments of this application, the terminal device may further obtain an AI service provided by a network device. Optionally, the terminal device may further have an AI processing capability.

(2) A network device may be a device in a wireless network. For example, the network device may be a RAN node (or device) connecting a terminal device to the wireless network, and may also be referred to as a base station. Currently, some examples of RAN devices are: a base station (base station), an evolved NodeB (evolved NodeB, eNodeB), a base station gNB (gNodeB) in a 5G communication system, a transmit/receive point (transmit/receive point, TRP), an evolved NodeB (evolved NodeB, eNB), a radio network controller (radio network controller, RNC), a NodeB (NodeB, NB), a home base station (for example, a home evolved NodeB, or a home NodeB, HNB), a baseband unit (baseband unit, BBU), or a wireless fidelity (wireless fidelity, Wi-Fi) access point AP. In addition, in a network structure, the network device may include a central unit (centralized unit or central unit, CU) node, a distributed unit (distributed unit, DU) node, or a RAN device including a CU node and a DU node.

Optionally, the RAN node may alternatively be a macro base station, a micro base station, an indoor base station, a relay node, or a donor node, or may be a radio controller in a cloud radio access network (cloud radio access network, CRAN) scenario. The RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU).

In another possible scenario, a plurality of RAN nodes coordinate to assist the terminal in implementing radio access, and different RAN nodes each implement a part of functions of a base station. For example, the RAN node may be a central unit CU, a distributed unit DU, a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Communication between an access network device and a terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control or medium access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between network elements in the ORAN system and protocol layer functions that may be implemented by the network elements, refer to Table 1.

**Table 1**

| ORAN network element | 3GPP protocol layer function |
|---|---|
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

The network device may be another apparatus that provides a wireless communication function to the terminal device. A specific technology and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), and a public data network gateway (public data network gateway, PDN gateway, P-GW) in a 4th generation (4th generation, 4G) network, and an access and mobility management function (access and mobility management function, AMF), a user plane function (user plane function, UPF), and a session management function (session management function, SMF) in a 5G network. In addition, the core network device may further include another core network device in the 5G network and a next generation network of the 5G network.

In embodiments of this application, the network device may alternatively be a network node having an AI capability, and may provide an AI service for a terminal or another network device, for example, may be an AI node, a computational power node, a RAN node having an AI capability, or a core network element having an AI capability on a network side (an access network or a core network).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is a network device is used for describing the technical solutions provided in embodiments of this application.

(3) Configuration and preconfiguration: In this application, both the configuration and the preconfiguration are used. The configuration means that a network device/server sends configuration information of some parameters or values of parameters to a terminal by using a message or signaling, so that the terminal determines, based on the values or the information, a communication parameter or a resource used for transmission. Similar to the configuration, the preconfiguration may be parameter information or a parameter value negotiated by a network device/server with a terminal device in advance, or may be parameter information or a parameter value used by a base station/network device or a terminal device as specified in a standard protocol, or may be parameter information or a parameter value prestored in a base station/server or a terminal device. This is not limited in this application.

Further, these values and parameters may be changed or updated.

(4) Terms "system" and "network" in embodiments of this application may be used interchangeably. "A plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, but are not used to limit a sequence, a time sequence, priorities, or importance of the plurality of objects.

(5) "Sending" and "receiving" in embodiments of this application represent signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It can be understood that necessary processing, for example, encoding or modulation, may be performed on information between a source end that sends the information and a destination end, but the destination end can understand valid information from the source end. Similar descriptions in this application may be understood similarly, and details are not described again.

(6) In embodiments of this application, "indication" may include a direct indication and an indirect indication, or may include an explicit indication and an implicit indication. Information indicated by specific information (for example, indication information in the following descriptions) is referred to as to-be-indicated information. In this case, during specific implementation, the to-be-indicated information may be indicated in a plurality of manners, for example, but not limited to: the to-be-indicated information may be directly indicated, for example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only a part of the to-be-indicated information may be indicated, and a remaining part of the to-be-indicated information is known or pre-agreed upon. For example, specific information may be indicated by an arrangement sequence of a plurality of pieces of information that is pre-agreed upon (for example, predefined in a protocol), to reduce indication overheads to some extent. A specific indication manner is not limited in this application. It can be understood that, for a sending party of the indication information, the indication information may indicate the to-be-indicated information, and for a receiving party of the indication information, the indication information may be used to determine the to-be-indicated information.

In this application, unless otherwise specified, for same or similar parts of embodiments, reference may be made to each other. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application are not intended to limit the protection scope of this application.

This application may be applied to a long term evolution (long term evolution, LTE) system, a new radio (new radio, NR) system, or a future communication system (for example, 6G) after 5G. The communication system includes at least one network device and/or at least one terminal device.

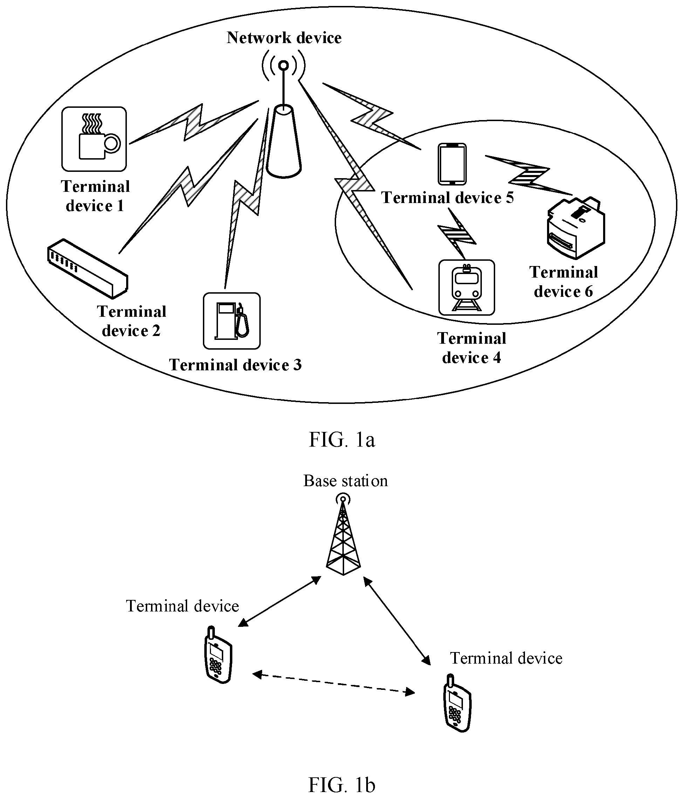

FIG. 1a is a diagram of a communication system according to this application. FIG. 1a shows an example of one network device and six terminal devices. The six terminal devices are respectively a terminal device 1, a terminal device 2, a terminal device 3, a terminal device 4, a terminal device 5, and a terminal device 6. In the example shown in FIG. 1a, an example in which the terminal device 1 is a smart teacup, the terminal device 2 is a smart air conditioner, the terminal device 3 is a smart fuel dispenser, the terminal device 4 is a means of transportation, the terminal device 5 is a mobile phone, and the terminal device 6 is a printer is used for description.

As shown in FIG. 1a, an AI configuration information sending entity may be the network device. AI configuration information receiving entities may be the terminal device 1 to the terminal device 6. In this case, the network device and the terminal device 1 to the terminal device 6 form a communication system. In the communication system, the terminal device 1 to the terminal device 6 may send data to the network device, and the network device needs to receive the data sent by the terminal device 1 to the terminal device 6. Besides, the network device may send configuration information to the terminal device 1 to the terminal device 6.

For example, in FIG. 1a, the terminal device 4 to the terminal device 6 may also form a communication system. The terminal device 5 serves as a network device, that is, an AI configuration information sending entity. The terminal device 4 and the terminal device 6 serve as terminal devices, that is, AI configuration information receiving entities. For example, in an internet of vehicles system, the terminal device 5 sends AI configuration information separately to the terminal device 4 and the terminal device 6, and receives data sent by the terminal device 4 and the terminal device 6; and correspondingly, the terminal device 4 and the terminal device 6 receive the AI configuration information sent by the terminal device 5, and send the data to the terminal device 5.

The communication system shown in FIG. 1a is used as an example. In addition to a communication-related service, an AI-related service may be performed between different devices (including between network devices, between a network device and a terminal device, and/or between terminal devices).

As shown in FIG. 1b, an example in which the network device is a base station is used. A communication-related service and an AI-related service may be performed between the base station and one or more terminal devices, and a communication-related service and an AI-related service may also be performed between different terminal devices.

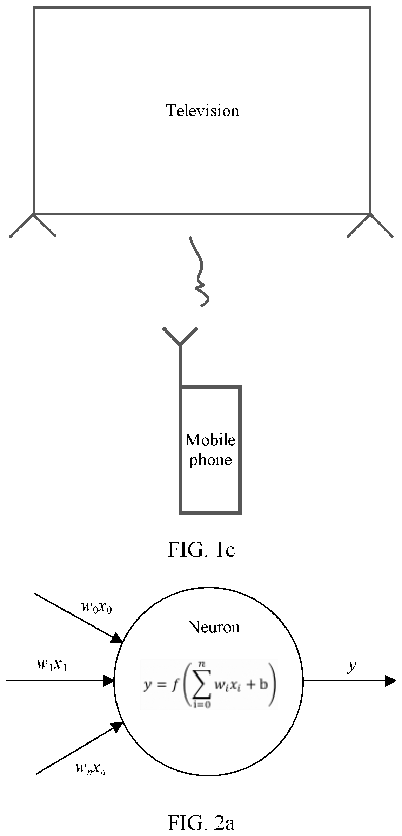

As shown in FIG. 1c, an example in which terminal devices include a television and a mobile phone is used. A communication-related service and an AI-related service may also be performed between the television and the mobile phone.

The technical solutions provided in this application may be applied to a wireless communication system (for example, the system shown in FIG. 1a, FIG. 1b, or FIG. 1c). For example, an AI network element may be introduced to the communication system provided in this application to implement all or part of AI-related operations. The AI network element may also be referred to as an AI node, an AI device, an AI entity, an AI module, an AI model, an AI unit, or the like. The AI network element may be built in a network element in a communication system. For example, the AI network element may be an AI module built in the access network device, the core network device, a cloud server, or a network management system (operation, administration and maintenance, OAM), to implement an AI-related function. The OAM may serve as a network management system of the core network device and/or a network management system of the access network device. Alternatively, the AI network element may be an independently disposed network element in a communication system. Optionally, the terminal or the chip built in the terminal may alternatively include the AI entity, configured to implement the AI-related function.

The following briefly describes artificial intelligence (artificial intelligence, AI) that may be used in this application.

The artificial intelligence (artificial intelligence, AI) may enable machines to have human intelligence, for example, can enable the machines to use computer software and hardware to simulate some intelligent human behaviors. To implement the artificial intelligence, a machine learning method may be used. In the machine learning method, a machine obtains a model through learning (or training) by using training data. The model represents mapping from an input to an output. The model obtained through learning may be used for inference (or prediction). To be specific, the model may be used to predict an output corresponding to a given input. The output may also be referred to as an inference result (or a prediction result).

Machine learning may include supervised learning, unsupervised learning, and reinforcement learning. The unsupervised learning may also be referred to as non-supervised learning.

In terms of the supervised learning, based on collected sample values and sample labels, a mapping relationship between the sample values and the sample labels is learned by using a machine learning algorithm, and the learned mapping relationship is expressed by using an AI model. A process of training a machine learning model is a process of learning the mapping relationship. In the training process, a sample value is input into the model to obtain a predicted value of the model, and a model parameter is optimized by calculating an error between the predicted value of the model and a sample label (ideal value). After the mapping relationship is learned, a new sample label may be predicted by using the learned mapping. The mapping relationship learned through the supervised learning may include linear mapping or non-linear mapping. Learning tasks may be classified into a classification task and a regression task based on a type of a label.

In terms of unsupervised learning, an internal pattern of a sample is explored autonomously by using an algorithm based on a collected sample value. For a specific type of algorithm of the unsupervised learning, a sample is used as a supervised signal. In other words, a model learns a mapping relationship between samples, which is referred to as self-supervised learning. During training, a model parameter is optimized by calculating an error between a predicted value of the model and the sample. The self-supervised learning may be used for signal compression and decompression restoration. Common algorithms include an autoencoder, a generative adversarial network, and the like.

The reinforcement learning is different from the supervised learning, and is an algorithm that learns a policy of resolving problems by interacting with an environment. Different from supervised learning and unsupervised learning, reinforcement learning does not have clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. An objective of the reinforcement learning is also to learn a mapping relationship between an environment status and a better (for example, an optimal) decision action. However, a label of "correct action" cannot be obtained in advance. Therefore, a network cannot be optimized by calculating an error between an action and the "correct action". Reinforcement learning training is implemented through iterative interaction with the environment.

A neural network (neural network, NN) is a specific model in a machine learning technology. According to a universal approximation theorem, the neural network can theoretically approximate any continuous function, so that the neural network has a capability of learning any mapping. In a conventional communication system, rich expertise is required to design a communication module. However, in a neural network-based deep learning communication system, an implicit pattern structure may be automatically discovered from a large quantity of datasets and a mapping relationship between data may be established, to obtain performance better than that of a conventional modeling method.

An idea of the neural network comes from a neuron structure of brain tissue. For example, each neuron performs a weighted summation operation on input values of the neuron, and outputs an operation result through an activation function.

FIG. 2a is a diagram of a neuron structure. It is assumed that inputs of neurons are x = [*x*₀, *x*₁, ..., *xₙ*], and weights corresponding to the inputs are respectively w = [*w*₀*, w*₁*,* ..., *wₙ*]*,* where n is a positive integer, and *wᵢ* and *xᵢ* may be in various possible types such as a real number, an integer (for example, 0, a positive integer, or a negative integer), or a complex number. *wᵢ* is used as a weight of *xᵢ*, and is used to weight *xᵢ*. A bias for performing weighted summation on the input values based on the weights is, for example, b. There may be a plurality of forms of the activation function. It is assumed that an activation function of a neuron is y = *f*(*z*) = max(0, *z*), and an output of the neuron is $y = f \left({\sum }_{i = 0}^{i = n} {w}_{i} ∗ {x}_{i} + b\right) = max \left(0, {\sum }_{i = 0}^{i = n} {w}_{i} ∗ {x}_{i} + b\right)$. For another example, if an activation function of a neuron is y = *f*(*z*) *= z*, an output of the neuron is $y = f \left({\sum }_{i = 0}^{i = n} {w}_{i} ∗ {x}_{i} + b\right) = {\sum }_{i = 0}^{i = n} {w}_{i} ∗ {x}_{i} + b$ *.* b may be various possible types such as a real number, an integer (for example, 0, a positive integer, or a negative integer), or a complex number. Activation functions of different neurons in the neural network may be the same or different.

In addition, the neural network usually includes a plurality of layers, and each layer may include one or more neurons. A depth and/or a width of the neural network ais increased, so that an expression capability of the neural network can be improved, and a more powerful information extraction and abstraction modeling capability can be provided for a complex system. The depth of the neural network may be a quantity of layers included in the neural network, and a quantity of neurons included at each layer may be referred to as a width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. The input layer of the neural network performs neuron processing on received input information, and transfers a processing result to an intermediate hidden layer. The hidden layer performs calculation on the received processing result to obtain a calculation result. The hidden layer transfers the calculation result to the output layer or a next adjacent hidden layer. Finally, the output layer obtains an output result of the neural network. One neural network may include one hidden layer, or include a plurality of hidden layers that are sequentially connected. This is not limited.

The neural network is, for example, a deep neural network (deep neural network, DNN). According to a network construction manner, the DNN may include a feedforward neural network (feedforward neural network, FNN), a convolutional neural network (convolutional neural network, CNN), and a recurrent neural network (recurrent neural network, RNN).

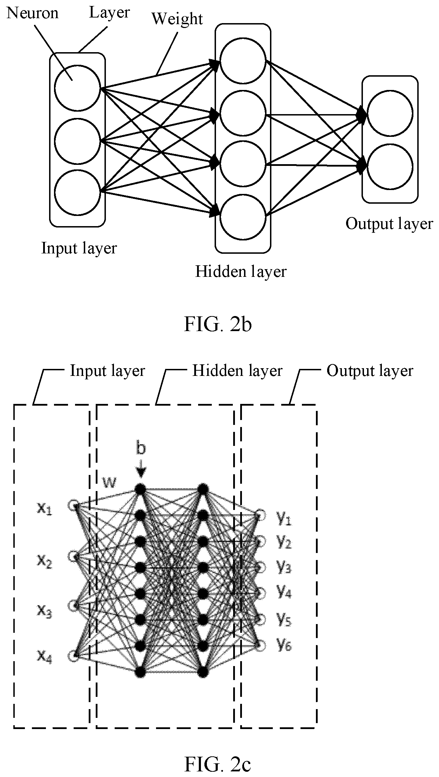

FIG. 2b is a diagram of an FNN network. A feature of the FNN network is that neurons at adjacent layers are fully connected to each other. Due to this feature, the FNN usually needs a large amount of storage space, resulting in high computing complexity.

The CNN is a neural network dedicated to processing data of a similar grid structure. For example, both time series data (timeline discrete sampling) and image data (two-dimensional discrete sampling) may be considered as the data of the similar grid structure. The CNN performs a convolution operation by capturing partial information through a window with a fixed size, instead of performing an operation based on all input information at one time. This greatly reduces a calculation amount of a model parameter. In addition, based on different types of information captured through the window (for example, a person and an object in a same image are information of different types), different convolution kernel operations may be used for each window, so that the CNN can better extract a feature of input data.

The RNN is a DNN network using feedback time series information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

In the foregoing model training process of machine learning, a loss function may be defined. The loss function describes a gap or a difference between an output value of the model and an ideal target value. The loss function may be expressed in a plurality of forms, and a specific form of the loss function is not limited. The model training process may be considered as the following process: All or part of parameters of the model are adjusted, so that a value of the loss function is less than a threshold or meets a target requirement.

The model may also be referred to as an AI model, a rule, another name, or the like. The AI model may be considered as a specific method for implementing an AI function. The AI model represents a mapping relationship or a function between an input and an output of the model. The AI function may include one or more of the following: data collection, model training (or model learning), model information release, model deduction (or referred to as model inference, inference, prediction, or the like), model monitoring or model verification, inference result release, or the like. The AI function may also be referred to as an AI (AI-related) operation or an AI-related function.

The following describes an example of an implementation process of a fully connected neural network with reference to the accompanying drawings. The fully connected neural network is also referred to as a multilayer perceptron (multilayer perceptron, MLP).

As shown in FIG. 2c, one MLP includes one input layer (left side), one output layer (right side), and a plurality of hidden layers (middle). Each layer of the MLP includes several nodes, which are referred to as neurons. Neurons at two adjacent layers are connected to each other in pairs.

Optionally, considering neurons at two adjacent layers, an output h of a neuron at a subsequent layer is obtained by applying an activation function to a weighted sum of all neurons x at a preceding layer connected to the neuron at the subsequent layer, and may be expressed as: $h = f \left(wx+b\right) .$

Herein, w is a weight matrix, b is a bias vector, and f is the activation function.

Further, optionally, the output of the neural network may be recursively expressed as: $y = {f}_{n} \left({w}_{n}{f}_{n - 1}\left(…\right)+{b}_{n}\right) .$

Herein, n is an index of a neural network layer, 1≤n≤N, and N is a total quantity of layers of the neural network.

In other words, the neural network may be understood as a mapping relationship from an input dataset to an output dataset. The neural network is usually initialized randomly, and a process of obtaining the mapping relationship from random w and b based on existing data is referred to as training of the neural network.

Optionally, a specific training manner is to evaluate an output result of the neural network by using a loss function (loss function).

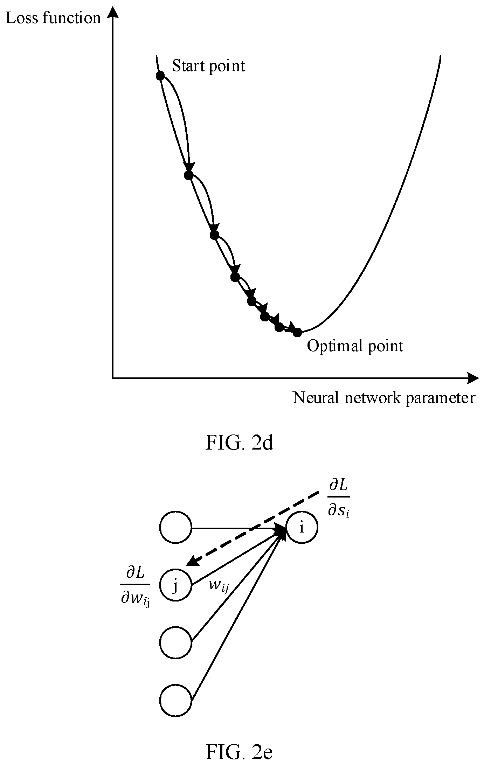

As shown in FIG. 2d, an error may be backpropagated, and neural network parameters (including ***w*** and ***b***) can be iteratively optimized by using a gradient descent method until a loss function reaches a minimum value, that is, "a better point (for example, the optimal point)" in FIG. 2d. It may be understood that a neural network parameter corresponding to "the better point (for example, the optimal point)" in FIG. 2d may be used as a neural network parameter in trained AI model information.

Further optionally, a gradient descent process may be expressed as: $θ ← θ - η \frac{\partial L}{\partial θ} .$

Herein, ***θ*** is a to-be-optimized parameter (including **w** and **b**), L is a loss function, η is a learning rate to control a gradient descent step size, ∂ represents a derivative operation, and $\frac{\partial L}{\partial θ}$ adenotes the derivative of *L* with respect to ***θ***.

Further, optionally, a backpropagation process uses a chain rule for finding a partial derivative.

As shown in FIG. 2e, a gradient of a parameter at a preceding layer may be obtained by recursive calculation of a gradient of a parameter at a subsequent layer, and may be expressed as: $\frac{\partial L}{\partial {w}_{i j}} = \frac{\partial L}{\partial {s}_{i}} \frac{\partial {s}_{i}}{\partial {w}_{ij}} .$

Herein, wᵢⱼ is a weight of connection between a node j and a node i, and sᵢ is an input weighted sum on the node i.

The technical solutions provided in this application may be applied to a wireless communication system (for example, the system shown in FIG. 1a, FIG. 1b, or FIG. 1c). In the wireless communication system, a communication node usually has signal receiving and sending capabilities and a computing capability. A network device having a computing capability is used as an example. The computing capability of the network device mainly provides computational power support for signal receiving and sending capabilities (for example, performing sending processing and receiving processing on a signal), to implement a communication task between the network device and another communication node.

However, in a communication network, in addition to providing computational power support for the foregoing communication task based on the computing capability of the communication node, the communication node may further have spare computing capabilities. Therefore, how to use these computing capabilities is an urgent technical problem.

To resolve the foregoing problem, this application provides a communication method and a related device. The following provides detailed descriptions with reference to the accompanying drawings.

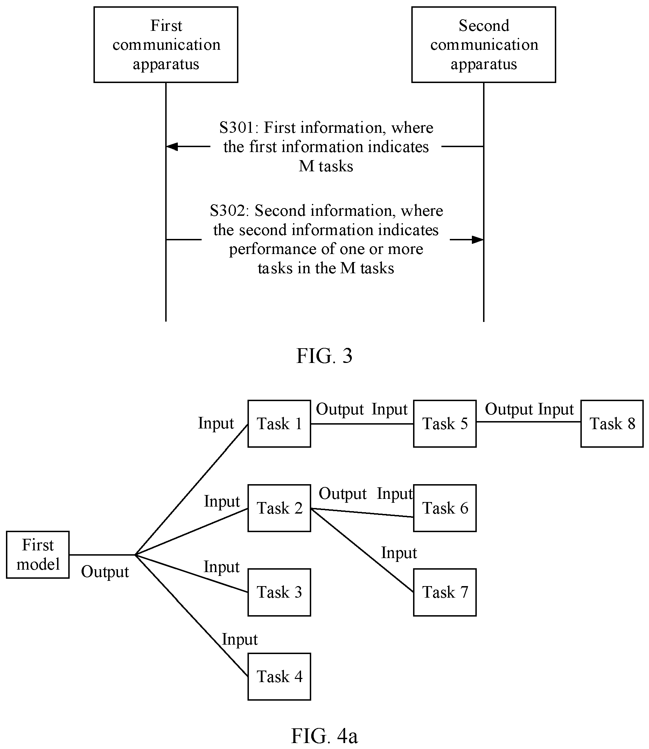

FIG. 3 is a diagram of an implementation of a communication method according to this application. The method includes the following steps.

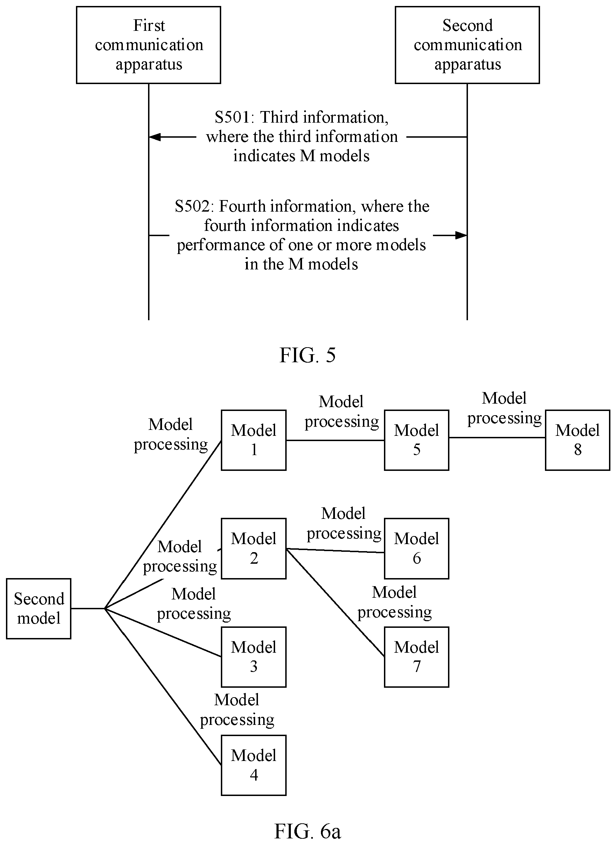

It should be noted that in FIG. 3 and FIG. 5 below, an example in which a first communication apparatus and a second communication apparatus are used as execution bodies of the interaction example is used to illustrate the method. However, the execution bodies of the interaction example are not limited in this application. For example, the first communication apparatus may be a communication device (for example, a terminal device or a network device), or a chip, a baseband (baseband) chip, a modem (modem) chip, a system on chip (system on chip, SoC) chip including a modem core, a system in package (system in package, SIP) chip, a communication module, a chip system, a processor, a logic module, or software in a communication device. Similarly, the second communication apparatus may be a communication device (for example, a terminal device or a network device), or a chip, a chip system, a processor, a logic module, software, or the like in a communication device.

S301: The second communication apparatus sends first information, and correspondingly, the first communication apparatus receives the first information. The first information indicates M tasks. Herein, M is a positive integer. In addition, an input of any task in the M tasks is determined based on an output of a first model.

S302: The first communication apparatus sends second information, and correspondingly, the second communication apparatus receives the second information. The second information indicates performance of one or more tasks in the M tasks.

In this application, the model and another term may be replaced with each other, for example, a neural network model, a neural network, an artificial intelligence (artificial intelligence, AI) model, or a machine learning model.

Optionally, the first information received by the first communication apparatus in step S301 may indicate to perform one or more of the following operations on performance of the M tasks: measuring, testing, monitoring, evaluating, gauging, feeding back, or reporting.

It should be understood that the input of the any task in the M tasks is determined based on the output of the first model. It may be understood that the input of the any task includes at least a result obtained by executing no task, one task, or a plurality of tasks on the output of the first model. The input of the any task in the M tasks may be obtained based on the output of the first model. Therefore, the M tasks may be referred to as downstream tasks of the first model.

Optionally, the output of the first model may be used to determine inputs of one or more downstream tasks.

For ease of understanding, with reference to an example shown in FIG. 4a, the following describes a relationship between the first model and the M tasks by using an example in which a value of M is 8.

In the example shown in FIG. 4a, an input of any task in a task 1, a task 2, a task 3, and a task 4 may include the output of the first model, that is, the input of any task in the four tasks may include a result obtained by executing no task on the output of the first model.

In the example shown in FIG. 4a, an input of a task 5 may include an output of the task 1. In other words, the input of the task 5 may include a result obtained by executing a task (namely, the task 1) in one task set on the output of the first model.

In the example shown in FIG. 4a, an input of a task 6 or a task 7 may include an output of the task 2. In other words, the input of the task 6 or the task 7 may include a result obtained by executing a task (namely, the task 2) in one task set on the output of the first model.

In the example shown in FIG. 4a, an input of a task 8 may include an output of the task 5. In other words, the input of the task 8 may include a result obtained by executing tasks (namely, the task 1 and the task 5) in two task sets on the output of the first model.

It should be noted that a value of M may be a positive integer. When the value of M is another value, for a relationship between the first model and the M tasks, refer to the example shown in FIG. 4a. In other words, in the M tasks, an input of any task includes at least a result obtained by performing no task, one task, or a plurality of tasks on the output of the first model.

For example, the first model may be a wireless pre-training model, a pre-training model, or a wireless large model.

Optionally, the input of the first model may be implemented in a plurality of manners, for example, one or more of an environment parameter collected by the first communication apparatus, a communication signal received by the first communication apparatus from another communication apparatus (for example, the second communication apparatus), and locally preconfigured information of the first communication apparatus.

Optionally, the any task in the M tasks may be implemented in a plurality of manners, including signal processing, model processing, processing in another application (application, APP), or another manner.

For example, the output of the first model may be multiple path component (multiple path component, MPC) information, and the any task in the M tasks may be model processing for obtaining channel-state information CSI, resource management or user scheduling application, model processing for path loss prediction, network optimization application, model processing for beam prediction, or beam management application.

For another example, the output of the first model may be a channel frequency response (channel frequency response, CFR), and the any task in the M tasks may be model processing for obtaining CSI, resource management or user scheduling application, model processing for interference prediction, interference management application, model processing for modulation and coding scheme (modulation and coding scheme, MCS) prediction, or adaptive modulation and coding application.

Optionally, performance of a task may include one or more of accuracy, precision, and a processing speed of the task (or an output of the task).

It should be noted that the second information may indicate the performance of the one or more tasks in a plurality of manners.

For example, after locally executing the one or more tasks and obtaining outputs of the one or more tasks, the first communication apparatus may determine the performance of the one or more tasks based on the outputs of the one or more tasks. In addition, the second information sent by the first communication apparatus may include information indicating or representing the performance of the one or more tasks.

For another example, after the first communication apparatus may locally execute the one or more tasks and obtain outputs of the one or more tasks, the second information sent by the first communication apparatus may include the outputs of the one or more tasks. Subsequently, a receiving party of the second information can determine the performance of the one or more tasks based on the outputs of the one or more tasks.

In a possible implementation, the M tasks indicated by the first information sent by the second communication apparatus in step S301 are included in N tasks. Herein, N is an integer greater than or equal to M. The N tasks correspond to P task sets, each of the P task sets includes one or more tasks in the N tasks, and different task sets in the P task sets include different tasks. An input of any task in an (i+1)^{th} task set in the P task sets includes outputs of one or more tasks in an i^{th} task set in the P task sets. Herein, P is a positive integer, and i ranges from 1 to P-1.

Specifically, in the N tasks including the M tasks, an input of any task is determined based on the output of the first model. The input of the any task includes at least a result obtained by executing no task, one task, or a plurality of tasks on the output of the first model. In other words, the N tasks may include a set of one or more levels of downstream tasks of the first model. In this way, the first information can indicate performance measurement and/or feedback of a downstream task of the first model in a scenario in which the first model has one or more levels of downstream task sets.

For example, P is greater than 2. In the P task sets, inputs of one or more tasks included in a 1^{st} task set include at least the output of the first model, and inputs of one or more tasks included in a 2^{nd} task set include at least a result obtained by executing the one or more tasks in the 1^{st} task set on the output of the first model. By analogy, inputs of one or more tasks included in a P^{th} task set include at least a result obtained by executing one or more tasks in a (P-1)^{th} task set on the output of the first model. In other words, the P task sets may also be expressed as P levels of task sets. For example, in the P levels of task sets, inputs of one or more tasks included in a 1^{st} level of task set include at least the output of the first model, and inputs of one or more tasks included in a 2^{nd} level of task set include at least a result obtained by executing the one or more tasks in the 1^{st} level of task set on the output of the first model. By analogy, inputs of one or more tasks included in a P^{th} level of task set include at least a result obtained by performing processing of one or more tasks in a (P-1)^{th} level of task set on the output of the first model.

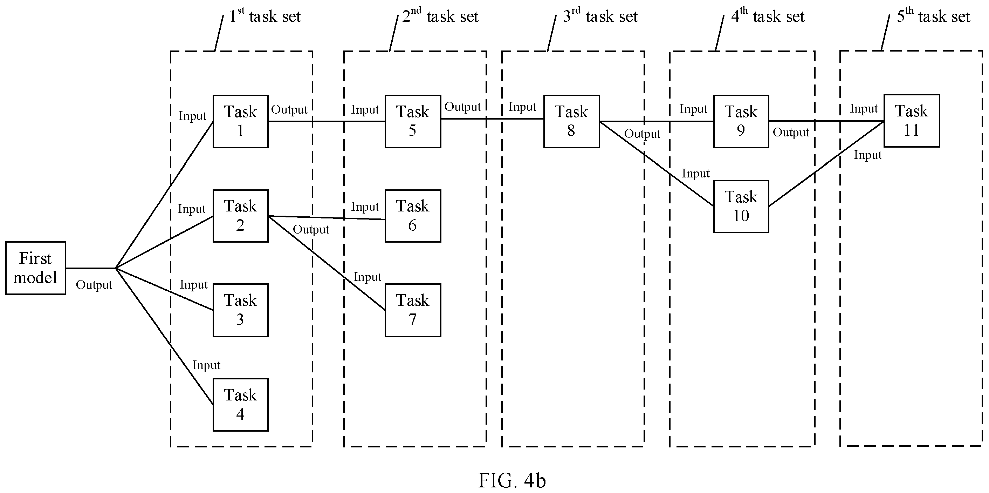

For ease of understanding, with reference to an example shown in FIG. 4b, the following describes a relationship between the first model and the M tasks by using an example in which a value of N is 11 and a value of M is 8.

In the example shown in FIG. 4b, for implementation of the task 1 to the task 8, refer to FIG. 4a and related descriptions.

In the example shown in FIG. 4b, an input of a task 9 or a task 10 may include an output of the task 8. In other words, the input of the task 9 or the task 10 may include a result obtained by executing one or more tasks (namely, the task 1, the task 5, and the task 8) in each of three previous task sets on the output of the first model.

In the example shown in FIG. 4b, an input of a task 11 may include outputs of the task 9 and the task 10. In other words, the input of the task 11 may include a result obtained by executing the five tasks (namely, the task 1, the task 5, the task 8, the task 9, and the task 10) on the output of the first model.

In addition, in the example shown in FIG. 4b, ten (N=11) tasks may correspond to five (P=5) task sets.

In a 1^{st} task set, an input of any task includes the output of the first model (that is, the result obtained by executing no task on the output of the first model). For example, in the 1^{st} task set, an input of any task in the task 1, the task 2, the task 3, and the task 4 includes the output of the first model.

When i=1 and i+1=2, in a 2^{nd} task set, an input of any task includes a result obtained by executing one or more tasks in the previous task set (that is, outputs of the one or more tasks in the 1^{st} task set) on the output of the first model. For example, in the 2^{nd} task set, the input of the task 5 includes the result obtained by executing the task 1 on the output of the first model, that is, the input of the task 5 may include the result obtained by executing a task (namely, the task 1) in one task set on the output of the first model; and the input of the task 6 or the task 7 may include the output of the task 2, that is, the input of the task 6 or the task 7 may include the result obtained by executing one task (namely, the task 2) on the output of the first model.

When i=2 and i+1=3, in a 3^{rd} task set, an input of any task includes a result obtained by executing one or more tasks in the two previous task sets (that is, outputs of the one or more tasks in the 2^{nd} task set) on the output of the first model. For example, in the 3^{rd} task set, the input of the task 8 includes the result obtained by executing the task 1 and the task 5 on the output of the first model, that is, the input of the task 8 may include the result obtained by executing the tasks (namely, the task 1 and the task 5) in the two task sets on the output of the first model.

When i=3 and i+1=4, in a 4^{th} task set, an input of any task includes a result obtained by executing three previous tasks (that is, outputs of the one or more tasks in the 3^{rd} task set) on the output of the first model. For example, in the 4^{th} task set, the input of the task 9 or the task 10 includes the result obtained by executing the task 1, the task 5, and the task 8 on the output of the first model, that is, the input of the task 9 or the task 10 may include the result obtained by executing the tasks (namely, the task 1, the task 5, and the task 8) in the three task sets on the output of the first model.

When i=4 and i+1=5, in a 5^{th} task set, an input of any task includes a result obtained by executing four previous tasks (that is, outputs of the one or more tasks in the 4^{th} task set) on the output of the first model. For example, in the 5^{th} task set, the input of the task 11 includes the result obtained by executing the task 1, the task 5, the task 8, the task 9, and the task 10 on the output of the first model, that is, the input of the task 11 may include the result obtained by executing the tasks (namely, the task 1, the task 5, the task 8, the task 9, and the task 10) in the four task sets on the output of the first model.

Optionally, an input of any task in the (i+1)^{th} task set in the P task sets includes the outputs of the one or more tasks in the i^{th} task set in the P task sets. It may be understood that an input of any task in a j^{th} task set in the P task sets includes a result obtained by performing j-1 processing processes on the output of the first model. The j-1 processing processes separately include processing of one or more tasks in each of j-1 task sets before the j^{th} task set. Herein, a value of j ranges from 1 to P.

For example, in the example shown in FIG. 4b, for the task 8 in the 3^{rd} (j=3) task set, the result is obtained by performing two (j-1=2) processing processes on the output of the first model. The two processing processes are separately included in processing of one or more tasks in each of two (j-1=2) task sets before the 3^{rd} (j=3) task set. In other words, the two processing processes are respectively processing of the task 1 in the 1^{st} (j-2=1) task set and processing of the task 1 in the 2^{nd} (j-1=2) task set.

For another example, in the example shown in FIG. 4b, for the task 9 in the 4^{th} (j=4) task set, the result is obtained by performing three (j-1=3) processing processes on the output of the first model. The three processing processes are separately included in processing of one or more tasks in each of three (j-1=3) task sets before the 4^{th} (j=4) task set. In other words, the three processing processes are respectively processing of the task 1 in the 1^{st} (j-3=1) task set, processing of the task 1 in the 2^{nd} (j-2=2) task set, and processing of the task 8 in the 3^{rd} (j-1=3) task set.

In a possible implementation, the process in which the first communication apparatus sends the second information in step S302 includes: the first communication apparatus sends the second information when the performance of the one or more tasks in the M tasks is less than or equal to a threshold. Specifically, after the first communication apparatus receives the first information indicating the M tasks, the first communication apparatus may obtain performance corresponding to the M tasks, and when the performance of the one or more tasks in the M tasks is less than or equal to the threshold, send the second information indicating the performance of the one or more tasks, so that the receiving party of the second information can determine, based on the second information, a task whose performance deteriorates.

In a possible implementation, the second information sent by the first communication apparatus in step S302 is further used to identify the one or more tasks in the M tasks. Specifically, the second information may indicate the performance of the one or more tasks in the M tasks, and correspondingly, the second information may further indicate the one or more tasks. In this manner, the receiving party of the second information can determine the one or more tasks in the M tasks based on the second information, and determine that the performance indicated by the second information is the performance of the one or more tasks in the M tasks.

It should be understood that, for a manner in which the second information indicates the one or more tasks in the M tasks, reference may be made to the manner in which the first information indicates the one or more tasks in the M tasks. For example, the second information may include M identifiers and T indexes.

Based on the technical solution shown in FIG. 3, after the first communication apparatus receives, in step S301, the first information indicating the M tasks, the first communication apparatus may send the second information in step S302, and indicate the performance of the one or more tasks in the M tasks by using the second information. In other words, the first model may be deployed on the first communication apparatus, and the first communication apparatus may measure and/or feed back, based on an indication of the first information, task performance implemented based on the output of the first model. In this way, the computational power of a communication node is enabled to process a model and a downstream task (and/or a downstream model) of the model, while implementing performance measurement and/or performance feedback and performance feedback.

In addition, in the M tasks indicated by the first information, the input of the any task is determined based on the output of the first model, that is, the output of the first model may be used to execute the one or more tasks. In the foregoing technical solution, the first communication apparatus may measure and/or feed back, based on the indication of the first information, the performance of the M tasks associated with the first model. This can improve flexibility of solution implementation, and can also achieve indication of performance measurement and/or feedback of a downstream task in a scenario in which the first model has the downstream task.

In the method shown in FIG. 3, the first information that is sent by the second communication apparatus in step S301 and that indicates the M tasks may be implemented in a plurality of manners. The following provides descriptions by using some implementation examples.

In an implementation example 1, the first information includes M identifiers, and the M identifiers respectively indicate the M tasks. Any identifier in the M identifiers includes K indexes. A k^{th} index in the K indexes indicates one or more tasks in a k^{th} task set in first K task sets of the P task sets. A value of k ranges from 1 to K, and K is a positive integer less than or equal to P.

It should be understood that the M identifiers respectively indicate the M tasks. It may be understood that the M identifiers are in a one-to-one correspondence with the M tasks, and/or an m^{th} identifier in the M identifiers indicates an m^{th} task in the M tasks. Herein, a value of m ranges from 1 to M.

In the implementation example 1, the first information received by the first communication apparatus may include the M identifiers respectively indicating the M tasks. In the P task sets, a task indicated by any identifier may be expressed as a task in a K^{th} (K is an integer less than or equal to P) task set in the P task sets. In addition, the any identifier in the M identifiers may include the K indexes, to separately indicate one or more tasks included in each of the K task sets by using the K indexes.

Optionally, in the implementation example 1, the any identifier further includes an identifier of the first model. Specifically, one or more first models may be deployed on the first communication apparatus, and correspondingly, each first model may have a downstream task. Therefore, the any identifier in the M identifiers indicating the M tasks may further include the identifier of the first model. In this manner, the first information can indicate the downstream tasks corresponding to the one or more first models.

In an application example of the implementation example 1, for example, the output of the first model is MPC, the value of M is 7, and the M tasks are respectively the task 1 to the task 7 shown in FIG. 4a. The first information may be implemented in a manner shown in Table 2 below.

**Table 2**

| Task/Model | Identifier | Task content | Performance |
|---|---|---|---|
| First model | 0 | Pre-trained model | Weighted mean absolute error (mean absolute error, MAE): $MAE = \frac{1}{N} {\sum }_{n = 1}^{N} {\sum }_{k} \left\|{x}_{k}^{n}-{{\hat{x}}^{n}}_{k}\right\| , x ∈ \left\{τ, p, θ, ϕ\right\} ,$ where N indicates a quantity of samples, n indicates an n^{th} sample, ${x}_{k}^{n}$ indicates a ground truth or a target value of a k^{th} path of the n^{th} sample, x̂ⁿₖ indicates a predicted value of the k^{th} path of the n^{th} sample, x includes a delay τ, a power p, an azimuth θ, and a pitch angle ϕ of the path, and \|x\| indicates to obtain an absolute value of x |
| Task 1 | 100 | Channel prediction | CFR: $NMSE = \frac{1}{N} {\sum }_{n = 1}^{N} \frac{{\left‖{\hat{H}}^{n}-{H}^{n}\right‖}^{2}}{{\left‖{H}^{n}\right‖}^{2}} ,$ where N indicates a quantity of samples, n indicates an n^{th} sample, Hⁿ indicates a true channel value of the n^{th} sample, Ĥⁿ indicates a predicted value of the n^{th} sample, and ∥x∥ indicates to obtain a modulus of x or a length of a vector |
| Task 5 | 1000 | MCS prediction | $\frac{1}{N} {\sum }_{n = 1}^{N} 1 \left\{{c}^{n}∈{\hat{C}}^{n}\right\} ,$ where N indicates a quantity of samples, n indicates an n^{th} sample, cⁿ indicates a true or target MCS of the n^{th} sample, Ĉⁿ indicates a predicted MCS of the n^{th} sample, and 1{cⁿ ∈ Ĉⁿ} indicates whether the predicted MCS includes the target MCS; and if the predicted MCS includes the target MCS, a value is 1; or otherwise, a value is 0 |
| Task 2 | 101 | Precoding matrix indicator (precoding matrix indicator, PMI) prediction | $\begin{matrix}PMI : SGCS = \\ \frac{1}{N} {\sum }_{n = 1}^{N} \left\{\frac{1}{S}{\sum }_{i = 1}^{S} {\sum }_{j}^{K} \frac{{λ}_{i}^{n , j}}{{\sum }_{k = 1}^{K} {λ}_{i}^{n , k}} {\left(\frac{\left‖{{w}^{˜}}_{i}^{n {, j}^{H}}{w}_{i}^{n , j}\right‖}{\left‖{{w}^{˜}}_{i}^{n , j}\right‖ \left‖{w}_{i}^{n , j}\right‖}\right)}^{2}\right\} ,\end{matrix}$ where N indicates a quantity of samples, n indicates an n^{th} sample, S indicates a quantity of resource blocks, i indicates an i^{th} resource block, K indicates a rank of a multiple-input multiple-output (multi-input multi-output, MIMO) channel matrix, j indicates a j^{th} rank, ${λ}_{i}^{n , j}$ indicates an amplitude of the j^{th} rank on the i^{th} resource block of the n^{th} sample, ${w}_{i}^{n , j}$ indicates a ground truth or a target value of a codebook vector corresponding to the j^{th} rank on the i^{th} resource block of the n^{th} sample, ${{w}^{˜}}_{i}^{n , j}$ indicates a predicted value of the codebook vector corresponding to the j^{th} rank on the i^{th} resource block of the n^{th} sample, and ${{w}^{˜}}_{i}^{n , {j}^{H}}$ indicates a conjugate transpose of ${{w}^{˜}}_{i}^{n , j}$ |
| Task 6 | 1010 | Beam prediction | $\frac{1}{N} {\sum }_{n = 1}^{N} 1 \left\{{c}^{n}∈{\hat{C}}^{n}\right\} ,$ where N indicates a quantity of samples, n indicates an n^{th} sample, cⁿ indicates a true or target beam of the n^{th} sample, Ĉⁿ indicates a predicted beam of the n^{th} sample, and 1{cⁿ ∈ Ĉⁿ} indicates whether the predicted beam includes the target beam; and if the predicted beam includes the target beam, a value is 1; or otherwise, a value is 0 |
| Task 7 | 1011 | Beam prediction | $\frac{1}{N} {\sum }_{n = 1}^{N} 1 \left\|{P}_{\hat{c}}^{n}-{P}_{c}^{n}\right\| ,$ where N indicates a quantity of samples, n indicates an n^{th} sample, ${P}_{c}^{n}$ indicates a power of a true or target beam of the n^{th} sample, and ${P}_{\hat{c}}^{n}$ indicates a power of a predicted beam of the n^{th} sample |
| Task 3 | 110 | Loss prediction | $MAE = \frac{1}{N} {\sum }_{n = 1}^{N} \left\|{P}^{n}-{\hat{P}}^{n}\right\| ,$ where N indicates a quantity of samples, n indicates an n^{th} sample, Pⁿ indicates a true path loss value of the n^{th} sample, and P̂ⁿ indicates a predicted path loss value of the n^{th} sample |
| Task 4 | 111 | Line of sight (line of sight, LoS) detection | $1 - \frac{1}{N} {\sum }_{n} 1 \left\{{c}^{n}={\hat{c}}^{n}\right\} ,$ where N indicates a quantity of samples, n indicates an n^{th} sample, cⁿ indicates a true or target line of sight LoS status of the n^{th} sample, ĉⁿ indicates a predicted LoS status of the n^{th} sample, and 1{cⁿ ≠ Ĉⁿ} indicates whether a ground truth is equal to a predicted value; and if the ground truth is not equal to the predicted value, a value is 0; or otherwise, a value is 1 |

In Table 1, identifiers respectively corresponding to the task 1 to the task 7 are "100", "101", "110", "111", "1000", "1010", and "1011". A 1^{st} bit of each identifier is the identifier of the "first model". For example, when a value of a 1^{st} bit of a specific identifier is 0, the identifier may be understood as indicating the first model; and when a value of a 1^{st} bit of a specific identifier is 1, the identifier may be understood as indicating a downstream task of the first model.

For the identifier "0" of the first model, if the first information received by the first communication apparatus in step S301 includes the identifier "0", the first communication apparatus may determine that the first information indicates the first model. Subsequently, the second information sent by the first communication apparatus in step S302 may include performance of the first model. For example, the second information may include a multipath error. In other words, a value of the multipath error represents performance of the task 1.

For the identifier "100" of the task 1, values of K indexes are "00" after the 1^{st} bit, that is, K=1, and one index occupies 2 bits. Correspondingly, if the first information received by the first communication apparatus in step S301 includes the identifier "100", the first communication apparatus may determine that the M tasks indicated by the first information include the task 1 (that is, channel prediction). If the second information subsequently sent by the first communication apparatus in step S302 includes the performance of the task 1, the second information may include a CSI normalized mean square error (normalized mean square error, NMSE), that is, a value of the CSI NMSE represents the performance of the task 1.

For the identifier "101" of the task 2, values of K indexes are "01" after the 1^{st} bit, that is, K=1, and the K (K=1) indexes occupy 2 bits. Correspondingly, if the first information received by the first communication apparatus in step S301 includes the identifier "101", the first communication apparatus may determine that the M tasks indicated by the first information include the task 2 (that is, PMI prediction). If the second information subsequently sent by the first communication apparatus in step S302 includes performance of the task 2, the second information may include a PMI squared generalized cosine similarity (squared generalized cosine similarity, SGCS), that is, a value of the PMI SGCS represents the performance of the task 2.

For the identifier "110" of the task 3, values of K indexes are "10" after the 1^{st} bit, that is, K=1, and the K (K=1) indexes occupy 2 bits. Correspondingly, if the first information received by the first communication apparatus in step S301 includes the identifier "110", the first communication apparatus may determine that the M tasks indicated by the first information include the task 3 (that is, loss prediction). If the second information subsequently sent by the first communication apparatus in step S302 includes performance of the task 3, the second information may include a path loss error, that is, a value of the path loss error represents the performance of the task 3.

For the identifier "111" of the task 4, values of K indexes are "11" after the 1^{st} bit, that is, K=1, and the K (K=1) indexes occupy 2 bits. Correspondingly, if the first information received by the first communication apparatus in step S301 includes the identifier "111", the first communication apparatus may determine that the M tasks indicated by the first information include the task 4 (that is, line of sight LoS prediction). If the second information subsequently sent by the first communication apparatus in step S302 includes performance of the task 4, the second information may include LoS detection accuracy, that is, a value of the LoS detection accuracy represents the performance of the task 4.

For the identifier "1000" of the task 5, values of K indexes are "1000" after a 1^{st} bit, that is, K=2, and a 1^{st} index of the K (K=2) K indexes occupies 2 bits, and a 2^{nd} index occupies 1 bit. Correspondingly, if the first information received by the first communication apparatus in step S301 includes the identifier "1000", the first communication apparatus may determine that the M tasks indicated by the first information include the task 5 (that is, MCS prediction). If the second information subsequently sent by the first communication apparatus in step S302 includes performance of the task 5, the second information may include MCS accuracy, that is, a value of the MCS accuracy represents the performance of the task 5.

For the identifier "1010" of the task 6, values of K indexes are "1010" after a 1^{st} bit, that is, K=2, and a 1^{st} index of the K (K=2) K indexes occupies 2 bits, and a 2^{nd} index occupies 1 bit. Correspondingly, if the first information received by the first communication apparatus in step S301 includes the identifier "1010", the first communication apparatus may determine that the M tasks indicated by the first information include the task 6 (that is, beam prediction). If the second information subsequently sent by the first communication apparatus in step S302 includes performance of the task 6, the second information may include beam accuracy, that is, a value of the beam accuracy represents the performance of the task 6.

For the identifier "1011" of the task 7, values of K indexes are "1011" after a 1^{st} bit, that is, K=2, and a 1^{st} index of the K (K=2) K indexes occupies 2 bits, and a 2^{nd} index occupies 1 bit. Correspondingly, if the first information received by the first communication apparatus in step S301 includes the identifier "1011", the first communication apparatus may determine that the M tasks indicated by the first information include the task 7 (that is, beam prediction). If the second information subsequently sent by the first communication apparatus in step S302 includes performance of the task 7, the second information may include a beam reference signal received power (reference signal received power, RSRP) error, that is, a value of the beam RSRP error represents the performance of task 7.

In an implementation example 2, the first information includes T indexes, tasks indicated by the T indexes are the M tasks, the T indexes respectively indicate T task sets in the P task sets, T is a positive integer less than or equal to P, a t^{th} index in the T indexes indicates no task, one task, or a plurality of tasks included in a t^{th} task set in the T task sets, and t is a positive integer less than T.

In the implementation example 2, the N downstream tasks of the first model may be included in the P task sets, and correspondingly, the M tasks in the N tasks may be included in the T task sets in the P task sets. The first information indicating the M tasks may include the T indexes, and the T indexes separately indicate no task, one task, or a plurality of tasks in each of the T task sets. In this manner, the first information can indicate the M tasks by using a task included in each of the T task sets.

Optionally, in the implementation example 2, the first information further includes an identifier of the first model. Specifically, in addition to the T indexes, the first information may further include the identifier of the first model. One or more first models may be deployed on the first communication apparatus, and correspondingly, each first model may have a downstream task. Therefore, in the first information indicating the M tasks, the first information may further include the identifier of the first model. In this manner, the first information can indicate the downstream tasks corresponding to the one or more first models.

Optionally, in the implementation example 2, the T indexes satisfy at least one of the following: in the t^{th} index in the T indexes, a value of a 1^{st} bit indicates whether the first information includes a (t+x)^{th} index, and a value of x ranges from 1 to T-t; or in the t^{th} index in the T indexes, when a value of the t^{th} index is a preset value, the t^{th} index indicates a task (or all tasks) included in the t^{th} task set. Therefore, when the value of the 1^{st} bit in the t^{th} index in the T indexes indicates whether the first information includes the (t+x)^{th} index, the first communication apparatus can determine, based on the value of the 1^{st} bit in the t^{th} index, whether the (t+x)^{th} index needs to be parsed, to reduce implementation complexity and avoid unnecessary overheads.

In addition, in the t^{th} index in the T indexes, when the value of the t^{th} index is the preset value, the t^{th} index indicates a task included in a p^{th} task set. In this manner, one or more tasks corresponding to an identifier can be indicated by using a special value of the identifier, to reduce overheads.

For example, that the value of the t^{th} index is the preset value may be understood as that, in a plurality of bits included in the t^{th} index, values of bits other than the 1^{st} bit are the preset value (for example, all 0s or all 1s); or in a plurality of bits included in the t^{th} index, values of the plurality of bits are the preset value.

The following uses the scenario shown in FIG. 4b as an example to describe a plurality of implementations of the T indexes when the M tasks indicated by the first information is four tasks (respectively the task 1, the task 2, the task 5, and the task 9).

In an application example of the implementation example 2, a value of T is equal to a value of P. To be specific, the first information may include four (T=P=4) indexes, and the four indexes may be implemented in a manner shown in Table 3.

**Table 3**

| First information | | | | |
|---|---|---|---|---|
| Identifier of the first model | T indexes (T=P=4) | | | |
| | 1^{st} index | 2^{nd} index | 3^{rd} index | 4^{th} index |

As shown in Table 3, the first information may include the T indexes that are respectively as follows:
The 1^{st} index corresponds to the 1^{st} task set in FIG. 4b, and a value of the 1^{st} index indicates the task 1 and the task 2.
The 2^{nd} index corresponds to the 2^{nd} task set in FIG. 4b, and a value of the 2^{nd} index indicates the task 5.
The 3^{rd} index corresponds to the 3^{rd} task set in FIG. 4b, and a value of the 3^{rd} index indicates that the M tasks do not include any task in the 3^{rd} task set.
The 4^{th} index corresponds to the 4^{th} task set in FIG. 4b, and a value of the 4^{th} index indicates the task 9.

The following uses the 1^{st} index as an example for description.

Implementation 1: The 1^{st} index needs to indicate one or more tasks in the task 1 to the task 4. Correspondingly, the 1^{st} index may include 4 bits, and the task 1 to the task 4 are indicated in a bitmap (bitmap) manner. For example, when a value of an i^{th} bit in the 4 bits is 1, it may indicate that the M tasks include an i^{th} task corresponding to the i^{th} bit; or when a value of an i^{th} bit in the 4 bits is 0, it may indicate that the M tasks do not include an i^{th} task corresponding to the i^{th} bit. In the foregoing example, values of the 4 bits in the 1^{st} index may be "1100".

Optionally, in the 1^{st} index, a value of a 1^{st} bit may further indicate whether the first information includes a (1+x)^{th} (x ranges from 1 to 3) index. Correspondingly, the 1^{st} index may include 5 bits whose values are "11100". The value "1" of the 1^{st} bit indicates that the first information includes at least one index in the 2^{nd} index, the 3^{rd} index, and the 4^{th} index. Values of the following 4 bits are "1100", and meanings of the following 4 bits are as the foregoing description.

Implementation 2: The 1^{st} index needs to indicate one or more tasks in the task 1 to the task 4, and there are 15 cases in total. Correspondingly, the 15 cases may be separately indicated by using at least 4 bits, and are respectively as follows:
Case 1: Indicate that the M tasks include the task 1, for example, values of the 4 bits are 0001.
Case 2: Indicate that the M tasks include the task 2, for example, values of the 4 bits are 0010.
Case 3: Indicate that the M tasks include the task 3, for example, values of the 4 bits are 0011.
Case 4: Indicate that the M tasks include the task 4, for example, values of the 4 bits are 0100.
Case 5: Indicate that the M tasks include the task 1 and the task 2, for example, values of the 4 bits are 0101.
Case 6: Indicate that the M tasks include the task 1 and the task 3, for example, values of the 4 bits are 0110.
Case 7: Indicate that the M tasks include the task 1 and the task 4, for example, values of the 4 bits are 0111.
Case 8: Indicate that the M tasks include the task 2 and the task 3, for example, values of the 4 bits are 1000.
Case 9: Indicate that the M tasks include the task 2 and the task 4, for example, values of the 4 bits are 1001.
Case 10: Indicate that the M tasks include the task 3 and the task 4, for example, values of the 4 bits are 1010.
Case 11: Indicate that the M tasks include the task 1, the task 2, and the task 3, for example, values of the 4 bits are 1011.
Case 12: Indicate that the M tasks include the task 1, the task 3, and the task 4, for example, values of the 4 bits are 1100.
Case 13: Indicate that the M tasks include the task 1, the task 2, and the task 4, for example, values of the 4 bits are 1101.
Case 14: Indicate that the M tasks include the task 2, the task 3, and the task 4, for example, values of the 4 bits are 1110.
Case 15: Indicate that the M tasks include the task 1, the task 2, the task 3, and the task 4, for example, values of the 4 bits are 1111.

In the foregoing example, the values of the 4 bits in the 1^{st} index may be "0101".

Optionally, in the 1^{st} index, a value of a 1^{st} bit may further indicate whether the first information includes a (1+x)^{th} (x ranges from 1 to 3) index. Correspondingly, the 1^{st} index may include 5 bits whose values are "10101". The value "1" of the 1^{st} bit indicates that the first information includes at least one index in the 2^{nd} index, the 3^{rd} index, and the 4^{th} index. Values of the following 4 bits are "0101", and meanings of the following 4 bits are as the foregoing description.

Implementation 3: The 1^{st} index indicates one task in the task 1 to the task 4, which corresponds to four cases; that none of the task 1 to the task 4 is selected, which corresponds to one case; and that all the task 1 to the task 4 are selected, which corresponds to one case. There are six cases in total. Correspondingly, the six cases may be separately indicated by using at least 3 bits, and are respectively as follows:
Case 1: Indicate that the M tasks include the task 1, for example, values of the 4 bits are 001.
Case 2: Indicate that the M tasks include the task 2, for example, values of the 4 bits are 010.
Case 3: Indicate that the M tasks include the task 3, for example, values of the 4 bits are 011.
Case 4: Indicate that the M tasks include the task 4, for example, values of the 4 bits are 100.
Case 5: Indicate that none of the task 1 to the task 4 is selected, for example, values of the 4 bits are 101.
Case 6: Indicate that all the task 1 to the task 4 are selected, for example, values of the 4 bits are 111.

Optionally, 101 and 110 are reserved values, and may indicate other information.

Implementation 4: The 1^{st} index indicates one task in the task 1 to the task 4, and there are four cases. Correspondingly, the four cases may be separately indicated by using at least 2 bits, and are respectively as follows:
Case 1: Indicate that the M tasks include the task 1, for example, values of the 4 bits are 00.
Case 2: Indicate that the M tasks include the task 2, for example, values of the 4 bits are 01.
Case 3: Indicate that the M tasks include the task 3, for example, values of the 4 bits are 10.
Case 4: Indicate that the M tasks include the task 4, for example, values of the 4 bits are 11.

In addition, in addition to the several bits included in the 1^{st} index to indicate the task 1 to the task 4, a specific bit (for example, the 1^{st} bit) in the 1^{st} index may indicate whether the first information includes the 2^{nd} index. For example, when a value of the 1^{st} bit in the 1^{st} index is 0, the first communication apparatus may determine that the first information does not include the 2^{nd} index and other identifiers after the 2^{nd} index; or when a value of the 1^{st} bit in the 1^{st} index is 1, the first communication apparatus may determine that the first information includes the 2^{nd} index and at least one index in other indexes after the 2^{nd} index.

In an application example of the implementation example 2, a value of T is less than or equal to a value of P. Because the M tasks (that is, the task 1, the task 2, the task 5, and the task 9) are separately included in the 1^{st} task set, the 2^{nd} task set, and the 4^{th} task set, the first information may include three (T=3) indexes, and the three indexes may be implemented in a manner shown in Table 4.

**Table 4**

| First information | | | |
|---|---|---|---|
| Identifier of the first model | T indexes (T=P=4) | | |
| | 1^{st} index | 2^{nd} index | 3^{rd} index |

As shown in Table 4, the first information may include the T indexes that are respectively as follows:
The 1^{st} index corresponds to the 1^{st} task set in FIG. 4b, and a value of the 1^{st} index indicates the task 1 and the task 2.
The 2^{nd} index corresponds to the 2^{nd} task set in FIG. 4b, and a value of the 2^{nd} index indicates the task 5.
The 3^{rd} index corresponds to the 4^{th} task set in FIG. 4b, and a value of the 4^{th} index indicates the task 9.

It should be noted that, for values of the indexes in Table 4, reference may be made to the implementations in the implementation 1 and the implementation 2.

In an implementation example 3, the first information includes M identifiers, and the M identifiers respectively indicate the M tasks. In the M identifiers, different identifiers have a same length.

In the implementation example 3, the first information may indicate the M tasks respectively by using the M equal-length identifiers. In other words, different tasks may be indicated by using equal-length sequences. In this manner, implementation complexity can be reduced.

In an application example of the implementation example 3, the scenario shown in FIG. 4b is used as an example. To be specific, the first information may include 10 (N=10) identifiers, and the 10 identifiers may be implemented in a manner shown in Table 5.

**Table 5**

| Task | Identifier (Q bits) |
|---|---|
| Task 1 | Value 1 |
| Task 2 | Value 2 |
| Task 3 | Value 3 |
| Task 4 | Value 4 |
| Task 5 | Value 5 |
| Task 6 | Value 6 |
| Task 7 | Value 7 |
| Task 8 | Value 8 |
| Task 9 | Value 9 |
| Task 10 | Value 10 |

In Table 5, different values of Q (Q is a positive integer) bits may indicate different tasks.

In an example, when values in the value 1 to the value 10 are all different, Q is greater than or equal to 4, that is, ten different values are separately indicated by using at least 4 bits.

In another example, when the values 1 to 5 are the same, and the values 6 to 10 are the same, Q is greater than or equal to 1, that is, two different values are separately indicated by using at least 1 bit. In other words, in this case, the first information may indicate whether the M tasks include the task 1 to the task 5, and whether the M tasks include the task 6 to the task 10.

FIG. 5 is a diagram of another implementation of a communication method according to this application. The method includes the following steps.

S501: A second communication apparatus sends third information, and correspondingly, a first communication apparatus receives the third information. The third information indicates M models. Herein, M is a positive integer. In addition, any model in the M models is obtained based on a second model.

Optionally, the third information received by the first communication apparatus in step S501 may indicate to perform one or more of the following operations on performance of the M models: measuring, testing, monitoring, evaluating, gauging, feeding back, reporting, uploading, or submitting.

S502: The first communication apparatus sends fourth information, and correspondingly, the second communication apparatus receives the fourth information. The fourth information indicates performance of one or more models in the M models.

It should be understood that any model in the M models is determined based on the second model. It may be understood that any model in the M models is obtained by performing one or more times of model processing based on the second model. Any processing in the one or more times of model processing may be model fine tuning, model distillation, model pruning, model compression, model fusion, or other model processing.

Optionally, performance of a model may include one or more of accuracy, precision, and a processing speed of the model (or an output of the model).

It should be noted that the fourth information may indicate the performance of the one or more models in a plurality of manners.

For example, after locally executing the one or more models and obtaining outputs of the one or more models, the first communication apparatus may determine the performance of the one or more models based on the outputs of the one or more models. In addition, the fourth information sent by the first communication apparatus may include information indicating or representing the performance of the one or more models.

For another example, after the first communication apparatus may locally execute the one or more models and obtain outputs of the one or more models, the fourth information sent by the first communication apparatus may include the outputs of the one or more models. Subsequently, a receiving party of the second information can determine the performance of the one or more models based on the outputs of the one or more models.

Optionally, the input of the second model may be implemented in a plurality of manners, for example, one or more of an environment parameter collected by the first communication apparatus, a communication signal received by the first communication apparatus from another communication apparatus (for example, the second communication apparatus), and locally preconfigured information of the first communication apparatus.

For ease of understanding, with reference to an example shown in FIG. 6a, the following describes a relationship between the second model and the M models by using an example in which a value of M is 8.

In the example shown in FIG. 6a, any model in a model 1, a model 2, a model 3, and a model 4 may be obtained based on the second model, that is, any model in the four models may be obtained by performing model processing once on the second model.

In the example shown in FIG. 6a, a model 5 may be obtained based on the model 1, that is, the model 5 may be obtained by performing model processing twice on the second model.

In the example shown in FIG. 6a, a model 6 or a model 7 may be obtained based on the model 2, that is, the model 6 or the model 7 may be obtained by performing model processing twice on the second model.

In the example shown in FIG. 6a, a model 8 may be obtained based on the model 5, that is, the model 8 may be obtained by performing model processing three times on the second model.

It should be noted that a value of M may be a positive integer. When the value of M is another value, for a relationship between the first model and the M models, refer to the example shown in FIG. 6a. In other words, any model in the M models may be obtained by performing model processing one or more times on the second model.

For example, the first model may be a wireless pre-training model, a pre-training model, or a wireless large model.

In a possible implementation, the M models indicated by the third information sent by the second communication apparatus in step S501 are included in N models. Herein, N is an integer greater than or equal to M. The N models correspond to P model sets, each model set in the P model sets includes one or more models in the N models, and different model sets in the P model sets include different models. Any model in an (i+1)^{th} model set in the P model sets is determined based on one or more models in an i^{th} model set in the P model sets. Herein, P is a positive integer, and i ranges from 1 to P-1.

For example, P is greater than 2. In the P model sets, any model in one or more models included in a 1^{st} model set is obtained by performing model processing based on the second model, and any model in one or more models included in a 2^{nd} model set is obtained by performing model processing based on the one or more models in the 1^{st} model set. By analogy, any model in one or more models included in a P^{th} model set is obtained by performing model processing based on one or more models in a (P-1)^{th} model set. In other words, the P model sets may also be expressed as P levels of model sets. In the P levels of model sets, any model in one or more models included in a 1^{st} level of model set is obtained by performing model processing based on the second model, and any model in one or more models included in a 2^{nd} level of model set is obtained by performing model processing based on the one or more models in the 1^{st} level of model set. By analogy, any model in one or more models included in a P^{th} level of model set is obtained by performing model processing based on one or more models in a (P-1)^{th} level of model set.

Specifically, any model in the N models including the M models is determined based on the second model. The any model may be obtained by performing no model processing or one or more times of model processing on the second model. In other words, the N models may include one or more levels of downstream model sets of the second model. In this way, the first information can indicate performance measurement and/or feedback of a downstream model of the second model in a scenario in which the second model has one or more levels of downstream model sets.

Optionally, any model in the (i+1)^{th} model set in the P model sets is determined based on the one or more models in the i^{th} model set in the P model sets. It may be understood that any model in a p^{th} model set in the P model sets is obtained by performing p-1 processing processes on the second model. The p-1 processing processes include model processing corresponding to one or more models in each model set in p-1 model sets before the p^{th} model set. Herein, a value of p ranges from 1 to P.

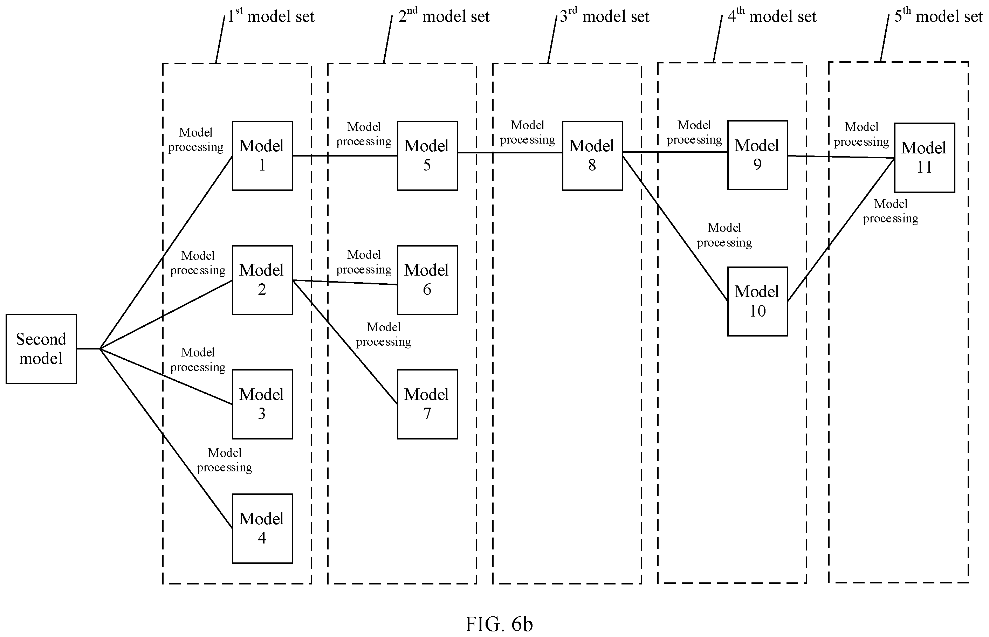

For ease of understanding, with reference to an example shown in FIG. 6b, the following describes a relationship between the second model and the M models by using an example in which a value of N is 11 and a value of M is 8.

In the example shown in FIG. 6b, for implementation of the model 1 to the model 8, refer to FIG. 6a and related descriptions.

In the example shown in FIG. 6b, a model 9 or a model 10 may be obtained based on the model 8, that is, the model 9 or the model 10 may be obtained by performing model processing on the model 8.

In the example shown in FIG. 6b, a model 11 may be obtained based on the model 9 and the model 10, that is, the model 11 may be obtained by performing model processing on the model 9 and the model 10.

In addition, in the example shown in FIG. 6b, ten (N=11) models may correspond to four (P=5) model sets.

In a 1^{st} model set, any model may be obtained based on the second model. For example, in the 1^{st} model set, any model in the model 1, the model 2, the model 3, and the model 4 is obtained by performing a specific time of model processing on the second model.

When i=1 and i+1=2, in a 2^{nd} model set, any model may be obtained by performing, based on the second model, model processing corresponding to one or more models in a previous model set (that is, obtained by performing model processing based on one or more models in the 1^{st} model set). For example, in the 2^{nd} model set, the model 5 is obtained by performing, based on the second model, model processing corresponding to the model 1, and the model 6 or the model 7 is obtained by performing, based on the second model, model processing corresponding to the model 2.

When i=2 and i+1=3, in a 3^{rd} model set, any model may be obtained by performing, based on the second model, model processing corresponding to one or more models in two previous model sets (that is, obtained by performing model processing based on one or more models in the 2^{nd} model set). For example, in the 3^{rd} model set, the model 8 is obtained by performing, based on the second model, model processing corresponding to the model 1 and the model 5.

When i=3 and i+1=4, in a 4^{th} model set, any model may be obtained by performing, based on the second model, model processing corresponding to one or more models in three previous model sets (that is, obtained by performing model processing based on one or more models in the 3^{rd} model set). For example, in the 4^{th} model set, the model 9 or the model 10 is obtained by performing, based on the second model, model processing corresponding to the model 1, the model 5, and the model 8.

When i=4 and i+1=5, in a 5^{th} model set, any model may be obtained by performing, based on the second model, model processing corresponding to one or more models in four previous model sets (that is, obtained by performing model processing based on one or more models in the 4^{th} model set). For example, in the 5^{th} model set, the model 11 is obtained by performing, based on the second model, model processing corresponding to the model 1, the model 5, the model 8, the model 9, and the model 10.

In a possible implementation, the process in which the first communication apparatus sends the fourth information in step S502 includes: the first communication apparatus sends the fourth information when the performance of the one or more models in the M models is less than or equal to a threshold. Specifically, after the first communication apparatus receives the third information indicating the M models, the first communication apparatus may obtain performance corresponding to the M models, and when the performance of the one or more models in the M models is less than or equal to the threshold, send the fourth information indicating the performance of the one or more models, so that a receiving party of the fourth information can determine, based on the fourth information, a model whose performance deteriorates.

In a possible implementation, the fourth information sent by the first communication apparatus in step S502 may further indicate the one or more models in the M models. Specifically, the fourth information may indicate the performance of the one or more models in the M models, and correspondingly, the fourth information may further indicate the one or more models. In this manner, the receiving party of the fourth information can determine the one or more models in the M models based on the fourth information, and determine that the performance indicated by the fourth information is the performance of the one or more models in the M models.

It should be understood that, for a manner in which the fourth information indicates the one or more models in the M models, reference may be made to the manner in which the third information indicates the one or more models in the M models. For example, the fourth information may include M identifiers and T indexes.

Based on the technical solution shown in FIG. 5, after the first communication apparatus receives, in step S501, the first information indicating the M models, the first communication apparatus may send the fourth information in step S502, and indicate the performance of the one or more models in the M models by using the fourth information. In other words, the second model and the M models obtained based on the second model may be deployed on the first communication apparatus, and the first communication apparatus may measure and/or feed back the performance of the M models based on an indication of the first information. In this way, the computational power of a communication node is enabled to process a model and a downstream task (and/or a downstream model) of the model, while implementing performance measurement and/or performance feedback.

In addition, any model in the M models indicated by the first information is determined based on the second model. In other words, the second model may be processed one or more times to generate any model in the M models. In the foregoing technical solution, the first communication apparatus may measure and/or feed back, based on the indication of the first information, the performance of the M models corresponding to the second model. This can improve flexibility of solution implementation, and can also achieve indication of performance measurement and/or feedback of a downstream model in a scenario in which the second model has the downstream model.

In the method shown in FIG. 5, the third information that is sent by the second communication apparatus in step S501 and that indicates the M models may be implemented in a plurality of manners. The following provides descriptions by using some implementation examples.

In an implementation example A, the third information includes M identifiers, and the M identifiers respectively indicate the M models. Any identifier in the M identifiers includes K indexes. A k^{th} index in the K indexes indicates model processing corresponding to one or more models in a k^{th} model set in first K model sets of the P model sets. A value of k ranges from 1 to K, and K is a positive integer less than or equal to P.

It should be understood that the M identifiers respectively indicate the M models. It may be understood that the M identifiers are in a one-to-one correspondence with the M models, and/or an m^{th} identifier in the M identifiers indicates an m^{th} model in the M models. Herein, a value of m ranges from 1 to M.

In the implementation example A, the third information received by the first communication apparatus may include the M identifiers respectively indicating the M models. In the P model sets, a model indicated by any identifier may be expressed as a model in a K^{th} (K is an integer less than or equal to P) model set in the P model sets. In addition, any identifier in the M identifiers may include K indexes, to separately indicate, by using the K indexes, model processing corresponding to the model.

Optionally, in the implementation example A, the any identifier further includes an identifier of processing of the second model. Specifically, one or more second models may be deployed on the first communication apparatus, and correspondingly, each second model may have a downstream model. Therefore, the any identifier in the M identifiers indicating the M models may further include the identifier of the second model. In this manner, the third information can indicate the downstream models corresponding to the one or more second models.

It should be noted that, for the third information in the implementation example A, reference may be made to an implementation process of the first information in the foregoing implementation example 1.

In an implementation example B, the third information includes T indexes, models indicated by the T indexes are the M models, the T indexes respectively indicate T model sets in the P model sets, T is a positive integer less than or equal to P, a t^{th} index in the T indexes indicates no model, one model, or a plurality of models included in a t^{th} model set in the T model sets, and t is a positive integer less than T.

In the implementation example B, the N downstream models of the second model may be included in the P model sets, and correspondingly, the M models in the N models may be included in the T model sets in the P model sets. The third information indicating the M models may include the T indexes. The T indexes separately indicate no model, one model, or a plurality of models in each model set in the T model sets. In this manner, the third information can indicate the M models by using a model included in each model set in the T model sets.

Optionally, in the implementation example B, the third information further includes an identifier of processing of the second model. Specifically, in addition to the T indexes, the third information may further include the identifier of the second model. One or more second models may be deployed on the first communication apparatus, and correspondingly, each second model may have a downstream model. Therefore, in the third information indicating the M models, the third information may further include the identifier of the second model. In this manner, the third information can indicate the downstream models corresponding to the one or more second models.

Optionally, in the implementation example B, the T indexes satisfy at least one of the following: in the t^{th} index in the T indexes, a value of a 1^{st} bit indicates whether the third information includes a (t+x)^{th} index, and a value of x ranges from 1 to T-t; or in the t^{th} index in the T indexes, when a value of the t^{th} index is a preset value, the t^{th} index indicates a model (or all models) included in the t^{th} model set.

For example, that the value of the t^{th} index is the preset value may be understood as that, in a plurality of bits included in the t^{th} index, values of bits other than the 1^{st} bit are the preset value (for example, all 0s or all 1s); or in a plurality of bits included in the t^{th} index, values of the plurality of bits are the preset value. Specifically, when the value of the 1^{st} bit in the t^{th} index in the T indexes indicates whether the third information includes the (t+x)^{th} index, the first communication apparatus can determine, based on the value of the 1^{st} bit in the t^{th} index, whether the (t+x)^{th} index needs to be parsed, to reduce implementation complexity and avoid unnecessary overheads.

In addition, in the t^{th} index in the T indexes, when the value of the t^{th} index is the preset value, the t^{th} index indicates a model included in the t^{th} model set. In this manner, one or more models corresponding to an identifier can be indicated by using a special value of the identifier, to reduce overheads.

It should be noted that, for the third information in the implementation example B, reference may be made to an implementation process of the first information in the foregoing implementation example 2.

In an implementation example C, the third information includes M identifiers, and the M identifiers respectively indicate the M models. In the M identifiers, different identifiers have a same length.

Optionally, in the implementation example C, the third information may indicate the M models respectively by using the M equal-length identifiers. In other words, different models may be indicated by using equal-length sequences. In this manner, implementation complexity can be reduced.

It should be noted that, for the third information in the implementation example C, reference may be made to the implementation process of the first information in the foregoing implementation example 3.

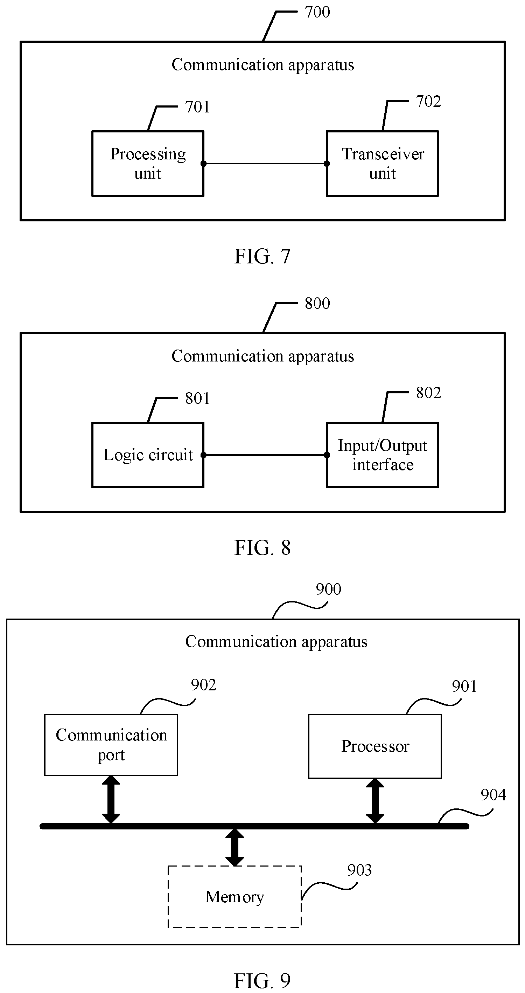

As shown in FIG. 7, an embodiment of this application provides a communication apparatus 700. The communication apparatus 700 can implement the functions of the second communication apparatus or the first communication apparatus in the foregoing method embodiments, and therefore can also implement beneficial effects of the foregoing method embodiments. In this embodiment of this application, the communication apparatus 700 may be the first communication apparatus (or the second communication apparatus), or may be an integrated circuit, an element, or the like in the first communication apparatus (or the second communication apparatus), for example, a chip.

It should be noted that a transceiver unit 702 may include a sending unit and a receiving unit that are respectively configured to perform sending and receiving.

In a possible implementation, when the apparatus 700 is configured to perform the method performed by the first communication apparatus in FIG. 3 and the related embodiment, the apparatus 700 includes a processing unit 701 and the transceiver unit 702. The transceiver unit 702 is configured to receive first information. The first information indicates M tasks. Herein, M is a positive integer. An input of any task in the M tasks is determined based on an output of a first model. The processing unit 701 is configured to determine second information. The transceiver unit 702 is further configured to send the second information. The second information indicates performance of one or more tasks in the M tasks.

In a possible implementation, when the apparatus 700 is configured to perform the method performed by the second communication apparatus in FIG. 3 and the related embodiment, the apparatus 700 includes a processing unit 701 and the transceiver unit 702. The processing unit 701 is configured to determine first information. The transceiver unit 702 is configured to send the first information. The first information indicates M tasks. Herein, M is a positive integer. An input of any task in the M tasks is determined based on an output of a first model. The transceiver unit 702 is further configured to receive second information. The second information indicates performance of one or more tasks in the M tasks.

In a possible implementation, when the apparatus 700 is configured to perform the method performed by the first communication apparatus in FIG. 5 and the related embodiment, the apparatus 700 includes a processing unit 701 and the transceiver unit 702. The transceiver unit 702 is configured to receive third information. The third information indicates M models. Herein, M is a positive integer. Any model in the M models is determined based on a second model. The processing unit 701 is configured to determine fourth information. The transceiver unit 702 is further configured to send the fourth information. The fourth information indicates performance of one or more models in the M models.

In a possible implementation, when the apparatus 700 is configured to perform the method performed by the second communication apparatus in FIG. 5 and the related embodiment, the apparatus 700 includes a processing unit 701 and the transceiver unit 702. The processing unit 701 is configured to determine third information. The transceiver unit 702 is configured to send the third information. The third information indicates M models. Herein, M is a positive integer. Any model in the M models is determined based on a second model. The transceiver unit 702 is further configured to receive fourth information. The fourth information indicates performance of one or more models in the M models.

In a possible design, when the communication apparatus 700 is a terminal device, a terminal, or a communication module in a terminal, a function of the processing unit 701 may be implemented by one or more processors. Specifically, the processor may include a modem chip, or a system on chip SoC chip or an SIP chip that includes a modem core. A function of the transceiver unit 702 may be implemented by a transceiver circuit.

In a possible design, when the communication apparatus 700 is a circuit or a chip that is responsible for a communication function in the terminal, for example, a modem chip, or a system on chip SoC chip or an SIP chip that includes a modem core, functions of the processing unit 701 may be implemented by a circuit system that includes one or more processors or processor cores in the chip. A function of the transceiver unit 702 may be implemented by an interface circuit or a data transceiver circuit on the foregoing chip.

It should be noted that for details of content such as an information execution process of the unit of the communication apparatus 700, reference may be made to descriptions in the foregoing method embodiments of this application. Details are not described herein again.

FIG. 8 is a diagram of another structure of a communication apparatus 800 according to this application. The communication apparatus 800 includes a logic circuit 801 and an input/output interface 802. The communication apparatus 800 may be a chip or an integrated circuit.

The transceiver unit 702 shown in FIG. 7 may be a communication interface. The communication interface may be the input/output interface 802 in FIG. 8. The input/output interface 802 may include an input interface and an output interface. Alternatively, the communication interface may be a transceiver circuit, and the transceiver circuit may include an input interface circuit and an output interface circuit.

In a possible implementation, when the apparatus 800 is configured to perform the method performed by the first communication apparatus in FIG. 3 and the related embodiment, the input/output interface 802 is configured to receive first information. The first information indicates M tasks. Herein, M is a positive integer. An input of any task in the M tasks is determined based on an output of a first model. The logic circuit 801 is configured to determine second information. The input/output interface 802 is further configured to send the second information. The second information indicates performance of one or more tasks in the M tasks.

In a possible implementation, when the apparatus 800 is configured to perform the method performed by the second communication apparatus in FIG. 3 and the related embodiment, the logic circuit 801 is configured to determine first information. The input/output interface 802 is configured to send the first information. The first information indicates M tasks. Herein, M is a positive integer. An input of any task in the M tasks is determined based on an output of a first model. The input/output interface 802 is further configured to receive second information. The second information indicates performance of one or more tasks in the M tasks.

In a possible implementation, when the apparatus 800 is configured to perform the method performed by the first communication apparatus in FIG. 5 and the related embodiment, the input/output interface 802 is configured to receive third information. The third information indicates M models. Herein, M is a positive integer. Any model in the M models is determined based on a second model. The logic circuit 801 is configured to determine fourth information. The input/output interface 802 is further configured to send the fourth information. The fourth information indicates performance of one or more models in the M models.

In a possible implementation, when the apparatus 800 is configured to perform the method performed by the second communication apparatus in FIG. 5 and the related embodiment, the logic circuit 801 is configured to determine third information. The input/output interface 802 is configured to send the third information. The third information indicates M models. Herein, M is a positive integer. Any model in the M models is determined based on a second model. The input/output interface 802 is further configured to receive fourth information. The fourth information indicates performance of one or more models in the M models.

The logic circuit 801 and the input/output interface 802 may further perform other steps performed by the first communication apparatus or the second communication apparatus in any embodiment, and implement corresponding beneficial effects. Details are not described herein again.

In a possible implementation, the processing unit 701 shown in FIG. 7 may be the logic circuit 801 in FIG. 8.

Optionally, the logic circuit 801 may be a processing apparatus, and a part of or all functions of the processing apparatus may be implemented by software. All or part of functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate arrays, FPGAs), application-specific integrated circuits (application-specific integrated circuits, ASICs), system on chips (system on chips, SoCs), central processing units (central processing units, CPUs), network processors (network processors, NPs), digital signal processors (digital signal processors, DSPs), microcontroller units (microcontroller units, MCUs), programmable logic devices (programmable logic devices, PLDs), or other integrated chips, or any combination of the foregoing chips or processors.

FIG. 9 shows a communication apparatus 900 in the foregoing embodiments according to an embodiment of this application. The communication apparatus 900 may be specifically a communication apparatus serving as a terminal device in the foregoing embodiments. An example shown in FIG. 9 is that the terminal device is implemented as the terminal device (or a component in the terminal device).

In a possible diagram of a logic structure of the communication apparatus 900, the communication apparatus 900 may include but is not limited to at least one processor 901 and a communication port 902.

The transceiver unit 702 shown in FIG. 7 may be a communication interface, the communication interface may be the communication port 902 in FIG. 9, and the communication port 902 may include an input interface and an output interface. Alternatively, the communication port 902 may be a transceiver circuit, and the transceiver circuit may include an input interface circuit and an output interface circuit.

Further, optionally, the apparatus may further include at least one of a memory 903 and a bus 904. In this embodiment of this application, the at least one processor 901 is configured to perform control processing on an action of the communication apparatus 900.

In addition, the processor 901 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

It should be noted that the communication apparatus 900 shown in FIG. 9 may be specifically configured to implement the steps implemented by the terminal device in the foregoing method embodiments, and achieve the technical effects corresponding to the terminal device. For a specific implementation of the communication apparatus shown in FIG. 9, refer to the descriptions in the foregoing method embodiments. Details are not described herein again.

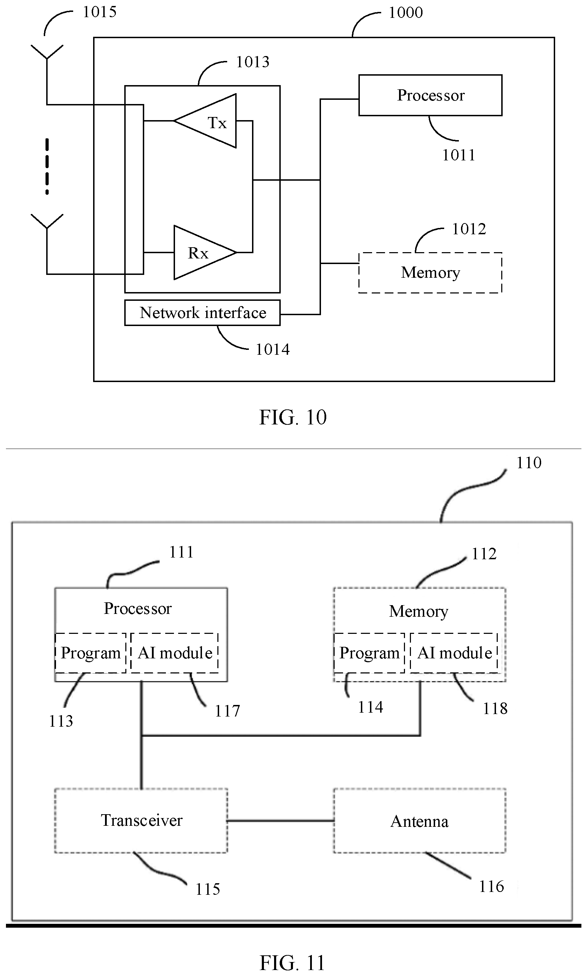

FIG. 10 is a diagram of a structure of a communication apparatus 1000 in the foregoing embodiment according to an embodiment of this application. The communication apparatus 1000 may be specifically the communication apparatus serving as the network device in the foregoing embodiment. In the example shown in FIG. 10, the network device is implemented as a network device (or a component in a network device). For a structure of the communication apparatus, refer to the structure shown in FIG. 10.

The communication apparatus 1000 includes at least one processor 1011 and at least one network interface 1014. Further, optionally, the communication apparatus further includes at least one memory 1012, at least one transceiver 1013, and one or more antennas 1015. The processor 1011, the memory 1012, and the transceiver 1013 are connected to the network interface 1014, for example, through a bus. In this embodiment of this application, the connection may include various interfaces, transmission lines, buses, or the like. This is not limited in this embodiment. The antenna 1015 is connected to the transceiver 1013. The network interface 1014 is configured to enable the communication apparatus to communicate with another communication device through a communication link. For example, the network interface 1014 may include a network interface, for example, an S1 interface, between the communication apparatus and a core network device. The network interface may include a network interface, for example, an X2 or Xn interface, between the communication apparatus and another communication apparatus (for example, another network device or core network device).

The transceiver unit 702 shown in FIG. 7 may be a communication interface, the communication interface may be the network interface 1014 in FIG. 10, and the network interface 1014 may include an input interface and an output interface. Alternatively, the network interface 1014 may be a transceiver circuit, and the transceiver circuit may include an input interface circuit and an output interface circuit.

The processor 1011 is mainly configured to process a communication protocol and communication data, control the entire communication apparatus, execute a software program, and process data of the software program, for example, configured to support the communication apparatus in performing the actions in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor 1011 in FIG. 10. A person skilled in the art may understand that the baseband processor and the central processing unit each may be an independent processor, and are interconnected through a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1012 may be independent, and connected to the processor 1011. Optionally, the memory 1012 and the processor 1011 may be integrated together, for example, integrated in a chip. The memory 1012 can store program code for executing technical solutions in embodiments of this application, and execution of the program code is controlled by the processor 1011. Various types of computer program code executed may also be considered as a driver of the processor 1011.

FIG. 10 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in embodiments of this application.

The transceiver 1013 may be configured to support receiving or sending of a radio frequency signal between the communication apparatus and a terminal, and the transceiver 1013 may be connected to the antenna 1015. The transceiver 1013 includes a transmitter Tx and a receiver Rx. Specifically, the one or more antennas 1015 may receive a radio frequency signal. The receiver Rx of the transceiver 1013 is configured to receive the radio frequency signal from the antenna, convert the radio frequency signal into a digital baseband signal or a digital intermediate frequency signal, and provide the digital baseband signal or the digital intermediate frequency signal for the processor 1011, so that the processor 1011 further processes, for example, performs demodulation processing and decoding processing on, the digital baseband signal or the digital intermediate frequency signal. In addition, the transmitter Tx of the transceiver 1013 is further configured to receive a modulated digital baseband signal or digital intermediate frequency signal from the processor 1011, convert the modulated digital baseband signal or digital intermediate frequency signal into a radio frequency signal, and send the radio frequency signal through the one or more antennas 1015. Specifically, the receiver Rx may selectively perform one or more levels of down-mixing processing and analog-to-digital conversion processing on the radio frequency signal to obtain the digital baseband signal or the digital intermediate frequency signal. A sequence of the down-mixing processing and the analog-to-digital conversion processing is adjustable. The transmitter Tx may selectively perform one or more levels of up-mixing processing and digital-to-analog conversion processing on the modulated digital baseband signal or digital intermediate frequency signal, to obtain the radio frequency signal. A sequence of the up-mixing processing and the digital-to-analog conversion is adjustable. The digital baseband signal and the digital intermediate frequency signal may be collectively referred to as a digital signal.

The transceiver 1013 may also be referred to as a transceiver unit, a transceiver machine, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. In other words, the transceiver unit includes the receiving unit and the sending unit. The receiving unit may also be referred to as a receiving device, an input interface, a receiver circuit, or the like. The sending unit may be referred to as a transmitting device, a transmitter, a transmitter circuit, or the like.

It should be noted that the communication apparatus 1000 shown in FIG. 10 may be specifically configured to implement the steps implemented by the network device in the foregoing method embodiments, and achieve the technical effects corresponding to the network device. For a specific implementation of the communication apparatus 1000 shown in FIG. 10, refer to the descriptions in the foregoing method embodiments. Details are not described herein again.

FIG. 11 is a diagram of a structure of a communication apparatus in the foregoing embodiment according to an embodiment of this application.

It may be understood that the communication apparatus 110 includes, for example, modules, units, elements, circuits, or interfaces, which are appropriately configured together to perform the technical solutions provided in this application. The communication apparatus 110 may be the terminal device or the network device described above, or may be a component (for example, a chip) in these devices, to implement the method described in the following method embodiments. The communication apparatus 110 includes one or more processors 111. The processor 111 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, the RAN node, the terminal, or the chip), execute a software program, and process data of the software program.

Optionally, in a design, the processor 111 may include a program 113 (which may also be referred to as code or instructions sometimes). The program 113 may be run on the processor 111, to enable the communication apparatus 110 to perform the methods described in the following embodiments. In another possible design, the communication apparatus 110 includes a circuit (not shown in FIG. 11).

Optionally, the communication apparatus 110 may include one or more memories 112 storing a program 114 (which may also be referred to as code or instructions sometimes). The program 114 may be run on the processor 111, so that the communication apparatus 110 performs the methods described in the foregoing method embodiments.

Optionally, the processor 111 and/or the memory 112 may include AI modules 117 and 118, and the AI module is configured to implement an AI-related function. The AI module may be implemented by using software, hardware, or a combination of software and hardware. For example, the AI module may include a radio intelligence control (radio intelligence control, RIC) module. For example, the AI module may be a near-real-time RIC or a non-real-time RIC.

Optionally, the processor 111 and/or the memory 112 may further store data. The processor and the memory may be separately disposed, or may be integrated together.

Optionally, the communication apparatus 110 may further include a transceiver 115 and/or an antenna 116. The processor 111 sometimes may also be referred to as a processing unit, and controls the communication apparatus (for example, the RAN node or the terminal). The transceiver 115 sometimes may also be referred to as a transceiver unit, a transceiver machine, a transceiver circuit, a transceiver, or the like, and is configured to implement transmission and reception functions of the communication apparatus through the antenna 116.

The processing unit 701 shown in FIG. 7 may be the processor 111. The transceiver unit 702 shown in FIG. 7 may be a communication interface. The communication interface may be the transceiver 115 in FIG. 11. The transceiver 115 may include an input interface and an output interface. Alternatively, the transceiver 115 may be a transceiver circuit, and the transceiver circuit may include an input interface circuit and an output interface circuit.

An embodiment of this application further provides a computer-readable storage medium. The storage medium is configured to store one or more computer-executable instructions. When the computer-executable instructions are executed by a processor, the processor performs the method in the possible implementations of the first communication apparatus or the second communication apparatus in the foregoing embodiments.

An embodiment of this application further provides a computer program product (or referred to as a computer program). When the computer program product is executed by a processor, the processor performs the method in the possible implementations of the first communication apparatus or the second communication apparatus.

An embodiment of this application further provides a chip system. The chip system includes at least one processor configured to support a communication apparatus in implementing the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the first communication apparatus or the second communication apparatus in the foregoing method embodiments.

An embodiment of this application further provides a communication system. An architecture of the network system includes the first communication apparatus and the second communication apparatus in any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms. Whether a specific function is performed by hardware or software depends on particular application and design constraint conditions of the technical solutions. A person skilled in the art may use different methods to implement the described functions for each particular application, but it should not be considered that the implementation goes beyond the scope of this application.

The units described as separate parts may or may not be physically separate, and parts displayed as units may or may not be physical units, may be located in one position, or may be distributed on a plurality of network units. All or part of the units may be selected based on actual requirements to achieve the objectives of the solutions in the embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part making a contribution, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A communication method, comprising:
receiving first information, wherein the first information indicates M tasks, M is a positive integer, and an input of any task in the M tasks is determined based on an output of a first model; and
sending second information, wherein the second information indicates performance of one or more tasks in the M tasks.

2. A communication method, comprising:
sending first information, wherein the first information indicates M tasks, M is a positive integer, and an input of any task in the M tasks is determined based on an output of a first model; and
receiving second information, wherein the second information indicates performance of one or more tasks in the M tasks.

3. The method according to claim 1 or 2, wherein the M tasks are comprised in N tasks, N is an integer greater than or equal to M, the N tasks correspond to P task sets, each of the P task sets comprises one or more tasks in the N tasks, and different task sets in the P task sets comprise different tasks; and
an input of any task in an (i+1)^{th} task set in the P task sets comprises outputs of one or more tasks in an i^{th} task set in the P task sets, P is a positive integer, and i ranges from 1 to P-1.

4. The method according to claim 3, wherein the first information comprises M identifiers, and the M identifiers respectively indicate the M tasks; and
any identifier in the M identifiers comprises K indexes, a k^{th} index in the K indexes indicates one or more tasks in a k^{th} task set in first K task sets of the P task sets, a value of k ranges from 1 to K, and K is a positive integer less than or equal to P.

5. The method according to claim 4, wherein any identifier further comprises an identifier of the first model.

6. The method according to claim 4, wherein
the first information comprises T indexes, tasks indicated by the T indexes are the M tasks, the T indexes respectively indicate T task sets in the P task sets, T is a positive integer less than or equal to P, a t^{th} index in the T indexes indicates no task, one task, or a plurality of tasks comprised in a t^{th} task set in the T task sets, and t is a positive integer less than T.

7. The method according to claim 6, wherein the first information further comprises an identifier of the first model.

8. The method according to claim 6 or 7, wherein the T indexes satisfy at least one of the following:
in the t^{th} index in the T indexes, a value of a 1^{st} bit indicates whether the first information comprises a (t+x)^{th} index, and a value of x ranges from 1 to T-t; or
in the t^{th} index in the T indexes, when a value of the t^{th} index is a preset value, the t^{th} index indicates a task comprised in the t^{th} task set.

9. The method according to any one of claims 1 to 3, wherein the first information comprises M identifiers, and the M identifiers respectively indicate the M tasks; and
in the M identifiers, different identifiers have a same length.

10. The method according to any one of claims 1 to 9, wherein the second information further indicates the one or more tasks in the M tasks.

11. The method according to any one of claims 1 to 10, wherein the performance of the one or more tasks in the M tasks is less than or equal to a threshold.

12. A communication apparatus, comprising a module configured to perform the method according to any one of claims 1 to 11.

13. A communication apparatus, comprising at least one processor, wherein the at least one processor is coupled to a memory, and the at least one processor is configured to perform the method according to any one of claims 1 to 11.

14. The communication apparatus according to claim 13, wherein the communication apparatus is a chip or a chip system.

15. A readable storage medium, wherein the storage medium stores a computer program or instructions; and when the computer program or the instructions are executed by a communication apparatus, the method according to any one of claims 1 to 11 is implemented.
